# EUROPEAN PATENT SPECIFICATION

(11) **EP 4 402 204 B1**
(45) Date of publication and mention of the grant of the patent: **29.07.2026**
(21) Application number: 22786321.4
(22) Date of filing: 13.09.2022
(51) Int. Cl.: C08K 5/00, C08K 5/3435, C08K 5/3475, C08K 5/3492, C08L 25/14, C08F 212/08

(54) **HIGH CLARITY AND LOW HAZE UV STABILIZED STYRENE AND METHYL METHACRYLATE COPOLYMERS**
UV-STABILISIERTE STYROL- UND METHYLMETHACRYLATCOPOLYMERE MIT HOHER KLARHEIT UND NIEDRIGER TRÜBUNG
COPOLYMÈRES DE STYRÈNE ET DE MÉTHACRYLATE DE MÉTHYLE STABILISÉS PAR LES UV À HAUTE CLARTÉ ET À FAIBLE VOILE

(30) Priority: 14.09.2021 EP 21196690
(43) Date of publication of application: 24.07.2024
(73) Proprietor: INEOS Styrolution Group GmbH, 60325 Frankfurt (DE)
(72) Inventor: ROWLETT, Jarrett R., Oswego, Illinois 60543 (US); COCHRAN, Thomas W., Wilmington, Illinois 60481 (US)
(74) Representative: Jacobi, Markus Alexander
(86) International application number: PCT/EP2022/075367
(87) International publication number: WO 2023/041512

(56) References cited:
- EP-A1- 1 308 084
- WO-A1-2021/074154
- WO-A1-2022/112590
- CN-B- 106 751 775
- US-A1- 2004 030 009
- US-A1- 2005 090 587
- DATABASE CA [online] CHEMICAL ABSTRACTS SERVICE, COLUMBUS, OHIO, US; 1 June 2017 (2017-06-01), LIU, CHUNYAN ET AL: "Wear-resistant polyamide and ASA blend for automobile interior parts", XP002805722, retrieved from STN Database accession no. 2017:872081

## Description

The invention relates to a thermoplastic composition (P) having low haze, high clarity and UV resistivity, a process for its preparation, shaped articles made therefrom and its use for various applications, in particular outdoor applications in the construction and automotive sector. It also relates to high clarity and low haze UV stabilized styrene-methyl methacrylate copolymers (SMMA) with very low (minimal) yellowness change to high UV exposure.

Clear and transparent polymer materials are of considerable importance for many technical applications. It is often desirable to make transparent packaging materials such as films (e.g. for food packaging) or plastics moldings (e.g. bottles, boxes, etc.), transparent parts of buildings (e.g. window panes, films, signboards), transparent parts of cars (e.g. panes, screens, exterior lamp cases), transparent parts of electronics (e.g. screen surfaces, cases, lamps), optical fibers or transparent parts of varnish, toys, sports equipment or medical and laboratory equipment. Particularly desirable are such polymers or compositions which are transparent for at least visible light, e.g. in a wavelength range of from 380 nm to 800 nm, and remain stable even after being exposed to UV light.

Polymethyl methacrylate polymers (PMMA) bear the desired transparent properties. In particular, PMMA is transparent for visible light and stable towards UV light. However, the technical applicability of PMMA is limited, e.g. by its low dimensional stability due to water absorption, which is associated with the high polarity of the polymer. Furthermore, said water absorption also leads to a change in the refractive index of the polymer, which is particularly undesired in optical applications requiring high precision and accuracy.

In contrast to PMMA, vinylaromatic polymers, such as, e.g., polystyrene or polymers based on derivatives of styrene or copolymers bear desirable properties regarding dimensional stability. Furthermore, such vinylaromatic polymers are non-polar, therefore having no issues with high humidity applications, such as refractive index changes.

WO 2015/118142 discloses styrene/methyl methacrylate (SMMA) copolymers comprising 20 to 50 wt.-% of methyl methacrylate and 50 to 80 wt.-% of styrene for producing UV-translucent products. Specific UV absorbers or light stabilizers are not mentioned.

However, the vinylaromatic moieties absorb light in the range of the nearer UV light, in particular in the range of from 250 nm to 370 nm.

Therefore, the copolymers comprising typical amounts of vinylaromatic moieties bear impaired transparency properties, especially in this range. Furthermore, due to the absorption of UV light, vinylaromatic polymers can be partially damaged over time, thus that the shaped articles prepared therefrom can become hazy and discolored and lose transparency, even for light in the spectral range outside of the absorbed range. These issues lead to limitations for the use of polymers derived from vinylaromatic monomers, especially in applications where the polymers are exposed to UV light.

These issues can be partially overcome by the use of specific additives in the vinylaromatic polymer compositions, such as light stabilizers.

US 5,624,982 discloses non-yellowing styrenic polymers stabilized with a stabilizer system which comprises a benzotriazole UV absorber (e.g. Tinuvin^{®} 328; BASF), a hydroxyl-benbenzylisocyanurate primary antioxidant and a hindered amine light stabilizer (HALS). As HALS, an oligomeric condensation product of N,N'(2,2,6,6-tetramethylpi-peridinyl)alkylene diamine and 6-amino-2,4-dichloro-1,3,5-s-triazine which triazine amine group is preferably derived from morpholine (e.g. Cyasorb^{®} 3346), or bis(2,2,6,6,-tetramethyl-4-piperidinyl) sebacate (e.g. Tinuvin^{®} 770), or bis(1,2,2,6,6,-pentamethyl-4-piperidinyl) ester of (3,5-di-tert-butyl-4-hydroxybenzyl)-butylmalonate (e.g. Tinuvin 144) is used.

In a long list of suitable styrenic polymers SMMA copolymers are generally mentioned. In all examples of US 5,624,982 a stabilized blend of SAN-copolymers with ASA- and AES- graft copolymers is used which additionally comprises TiO₂ (pigment, inorganic UV-absorber). One of the 50 Examples shows a SAN-copolymer blend comprising a stabilizer system, comprising 0.4 pbw Tinuvin 328, 0.4 pbw Tinuvin 144 and 0.4 pbw Cyasorb 3346.

The balance in yellowing performance and weatherability and the transparency of these known blends are still in need of improvement.

WO 2006/057355 discloses resin compositions comprising 100 pbw of a SMMA- copolymer (MMA: 80 to 50 wt.-%), 0.1 to 2 pbw, of a HALS compound and 0.1 to 2 pbw of a benzotriazole compound. As HALS compound one or more derivatives of bis(1,2,2,6,6-pentamethyl-4-piperidiyl)- or bis(2,2,6,6-tetramethyl-4-piperidiyl)dicarboxylic acid di-esters may be used. In all examples one HALS compound (Tinuvin 770) and a UV-absorber (Tinuvin 329) are used in a 1:1 weight ratio.

KR 2010/0070143 discloses a styrene resin composition comprising 100 pbw of a methylmethacrylate styrene copolymer (styrene: 50 to 80 wt.-%), 0.05 to 1.0 pbw of a HALS stabilizer, and 0.05 to 1.0 pbw of a benzotriazole UV absorber (all examples: Tinuvin 329, 0.2 pbw). The HALS absorber is of the bis(1,2,2,6,6-pentamethyl-4-piperidiyl)- or bis(2,2,6,6-tetramethyl-4-piperidiyl)dicarboxylic acid diester type (all examples: Tinuvin 770, 0.2 pbw).

JP 2006/154445 discloses a light diffusing plate which layer (B) consists of a resin composition consisting of a SMMA copolymer (MMA: 5 to 50 wt.-%), and further 0.1 to 1 pbw of an UV absorber and 0.1 to 1 pbw of a HALS stabilizer. The UV-absorber can be i.a. of a benzophenone type, cyano acrylate type, salicylic ester type, benzotriazole type, triazine type, and oxal anilide type.

The afore-mentioned resin compositions comprising SMMA copolymers and stabilizer systems according to the prior art often offer a good indoor UV resistance but their out-door UV resistance is not satisfying. A stronger UV resistance of said materials is needed in many demanding outdoor applications, in particular applications in the construction or automotive sector.

However, especially in construction and automotive applications, it is difficult to obtain sufficient UV resistance while maintaining clarity and transparency of the articles, since the right combination and concentration of UV additives can increase UV performance, but at the same time deteriorate the color and optical properties of the resin. Additionally, without the correct combination of UV additives, increasing concentrations of UV additives often will only minimally increase UV performance, but reduce optical quality to a significantly greater extent. Therefore, in order to achieve high UV stability with as low of concentration of additives as possible, the functionality and purpose of each UV additive needs to be optimized to optimize the performance and appearance of the resin.

SMMA copolymers combine advantageous properties, such as dimensional stability, and good processability. Furthermore, the presence of methyl methacrylate contributes to the UV stability of the polymers. Still, the UV stability is often insufficient for outdoor applications. Furthermore, even the applicability of light stabilizing and UV-absorbing additives is limited due to potential solubility issues, since they may lead to haziness and discoloration of the polymer compositions, if introduced in higher amounts that may be required for the stabilization against UV-induced deterioration in outdoor applications.

In view of the above, there is a technical need to provide better resin compositions comprising SMMA copolymers that have an increased outdoor UV stability and a good balance of optical properties and UV-resistance. Often desired are a haze according to ASTM D1003 of 1.5% or less before weathering, measured on samples having a thickness of 3.175 mm (1/8 inch), and an increase of the yellowness index according to ASTM method E313 (test specimens of 3.175 mm (1/8 inch) thickness) by less than 1.3, preferably less than 1.0, more preferably less than 0.89 (measured from the CIE color space values using a D65 light source (observation angle 10°) according to ASTM E1348:2015) after outdoor stability testing according to SAE J2527 (issued 2004-02) through SAE J1960 at a radiant exposure of 5000 kJ/m² (Xenon irradiance (340 nm) of 0.55 W/m²).

Surprisingly, it was found that a thermoplastic composition (P) as described below bears such desired properties.

Therefore, one aspect of the present invention is a thermoplastic composition (P) comprising (or consisting of) components (a), (b), (c) and optionally (d):
(a) 95 to 99.96 wt.-%, preferably 97 to 99.92 wt.-%, more preferably 98 to 99.9 wt.-%, more preferably 98.5 to 99.5 wt.-%, based on the total weight of the thermoplastic composition (P), of at least one copolymer (a) comprising (or consisting of) repeating units derived from a vinylaromatic monomer (a1), in particular styrene, and methyl methacrylate (a2);
(b) 0.02 to 1.5 wt.-%, preferably 0.04 to 1.3 wt.-%, more preferably 0.1 to 1.0 wt.-%, more preferably 0.2 to 0.6 wt.-%, based on the total weight of the thermoplastic composition (P), of at least two hindered amine light stabilizers (HALS) (b), wherein at least one HALS is a high molecular weight hindered amine light stabilizer (HMw HALS) (b1), having a number average molecular weight (Mn) ≥ (equal to or greater than) 1800 g/mol, preferably ≥ 1900 g/mol more preferably ≥ 2000 g/mol, and at least one HALS is a low molecular weight hindered amine light stabilizer (LMw HALS) (b2), having a number average molecular weight of ≤ (equal to or less than) 1000 g/mol, preferably ≤ 900 g/mol, more preferably ≤ 800 g/mol;
(c) 0.02 to 1.5 wt.-%, preferably 0.04 to 1.0 wt.-%, more preferably 0.1 to 0.6 wt.-%, more preferably 0.2 to 0.4 wt.-%, based on the total weight of the thermoplastic composition (P), of at least two UV absorbers (c), which are not HALS, wherein at least one UV absorber (c1) has a peak absorption at a wavelength from 310 nm to 380 nm, and at least one UV absorber (c2) has a peak absorption at a wavelength from 260 nm to less than 310 nm, measured by UV/VIS spectroscopy.
(d) optionally up to 2.0 wt.-%, preferably up to 1.0 wt.-%, more preferably up to 0.5 wt.-%, more preferably up to 0.3 wt.-%, based on the total weight of the thermoplastic composition (P), of at least one further additive (d) different from HALS and UV absorbers,
wherein the copolymer (a) comprises 30 to 60 wt.-%, preferably 31 to 50 wt.-%, more preferably 35 to 49 wt.-%, more preferably 40 to 48 wt.-% based on the copolymer (a), of repeating units derived from methyl methacrylate (a2).

The number average molecular weight of HALS component (b1) and (b2) can be determined by common analytical methods such as Liquid chromatography-mass spectrometry (LC-MS), Gas chromatography-mass spectrometry (GC-MS) and gel permeation chromatography/size exclusion chromatography (GPC/SEC). Furthermore, NMR-methods can be used. In some cases, the HALS components (b1) and (b2) have distinct molecular weight, rather than a distribution. In these cases, the number average molecular weight is identical to the distinct molecular weight (formula weight) of the respective component. Often, the HALS components (b1) and (b2) are commercially available. In these cases, the molecular weights are published by the supplier. Where the HALS component has a molecular weight distribution, the number average molecular weight is preferably determined by NMR methods (nuclear magnetic resonance spectroscopy), in particular ¹H NMR spectroscopy, as described, e.g., in "Polymer Molecular Weight Analysis by 1H NMR Spectroscopy" (Josephat U. Izunobi and Clement L. Higginbotham, J. Chem. Educ. 2011, 88, 8, pp. 1098-1104).

Thermoplastic compositions according to the invention and shaped articles thereof have a high outdoor UV stability (UV-resistance), e.g. they can be used for a longer period of time (such as months or years) outdoor with changing temperatures and sun-light.

In the context of the present invention, the outdoor UV stability testing is conducted according to SAE J2527 (issued 2004-02) through SAE J1960 at a radiant exposure of 5000 kJ/m² with Xenon irradiance (wavelength 340 nm) of 0.55 W/m² at 70 °C for light cycle and 38°C for dark cycle.

In the context of the present invention, the term "high outdoor UV stability" means that after outdoor stability testing as described above, the yellowness index according to ASTM method E313 (test specimens of 3.125 mm (1/8) inch thickness) increases by less than 1.3, preferably less than 1.0, more preferably less than 0.89 (measured from the CIE color space values using a D65 light source (observation angle 10°) according to ASTM E1348:2015).

Furthermore, in the context of the present invention, the term "good optical properties" means that the haze of the thermoplastic composition before outdoor stability testing as described above is 1.5% or less, preferably 1.2% or less (measured according to ASTM D1003 using CIE illuminant C, test specimens of 3.125 mm (1/8 inch) thickness).

Another aspect of the invention is a process for the preparation of a thermoplastic composition (P) according to the invention by mixing copolymer (a) with HMw-HALS (b1), LMw-HALS (b2), UV absorber (c1) having a peak absorption at a wavelength from 310 nm to 380 nm, UV absorber (c2) having a peak absorption at a wavelength from 260 nm to less than 310 nm, and, if present, at least one further additive (d).

Another aspect of the invention is a process for the preparation of a shaped article comprising the thermoplastic composition (P). A further aspect of the invention is a shaped article comprising a thermoplastic composition (P).

Furthermore, an aspect of the invention is the use of components (a), (b), (c) and optionally (d), as defined herein, for the preparation of a thermoplastic composition (P) or a shaped article with the following properties:
(i) haze of less than 1.5%, measured according to ASTM D 1003 for a specimen having a thickness of 3,175 mm (1/8 inch);
(ii) a weathering resistance, which is characterized in that:
after outdoor stability testing according to SAE J2527 (issued 2004-02) through SAE J1960 at a radiant exposure of 5000 kJ/m² (Xenon irradiance (340 nm) of 0.55 W/m²), the yellowness index according to ASTM method E313 (test specimens of 3.125 mm (1/8) inch thickness) increases by less than 1.3, preferably less than 1.0, more preferably less than 0.89 (measured from the CIE color space values using a D65 light source (observation angle 10°) according to ASTM E1348:2015).

In the following, the invention and the components are described in more detail.

### Copolymer (a)

The term "copolymer" as used herein for copolymer (a) may be understood in the broadest sense as any polymer obtainable from two or more different types of monomers (i.e., (a1) at least one kind of vinylaromatic monomer and (a2) at least methyl methacrylate (MMA)) by polymerization. The terms indicating that the copolymer (a) comprises monomers or the polymer consists of monomers will be understood by those skilled in the art as meaning that the monomers in this context are monomeric moieties embedded into the copolymer strand, i.e. repeating units derived from the respective monomers.

Furthermore, a repeating unit derived from a certain monomer will be understood as a repeating unit obtained from said monomer during polymerization, i.e., "derived" does not mean that the repeating unit is obtained from a derivative of said monomer. For example, a repeating unit obtained by polymerization of alpha-methyl styrene is not considered a repeating unit derived from styrene in the context of the present invention.

In a preferred embodiment, the vinylaromatic monomer (a1) and methyl methacrylate (a2) in the copolymer (a) are not bound to rubber monomers such as butadiene moieties. Particularly preferably, the vinylaromatic monomer (a1) is styrene.

Preferably, the melt flow index (MFI) (determined at a temperature of 200°C and at a load of 5 kg according to ASTM procedure D1238 - 20) of the copolymers (a) according to the present invention is less than 50 g/10 min, more preferably less than 20 g/10 min, more preferably of less than 10 g/10 min, often less than 5 g/10 min.

In a copolymer (a), the different types of repeating units may be either statistically and homogeneously distributed over the copolymer (random copolymer) or may be located at distinct areas of the polymer strand(s) arranged in blocks (block copolymer).

The term "block copolymer" may be understood in the broadest sense as any copolymer having distinct areas of the polymer strand(s) arranged in blocks. Preferably, the copolymer (a) however is a random copolymer.

Optionally, the copolymer (a) according to the present invention may also contain one or more methacrylate derivatives other than MMA such as, e.g. ethyl methacrylate (EMA), butyl methacrylate (BMA) and 2-ethyl hexyl methacrylate (2-EHMA), and methacrylic acid. Preferably, such methacrylate derivatives and methacrylic acid constitute for not more than 25 wt.-% of the copolymer mass, more preferably not more than 10 wt.-% of the copolymer mass, often not more than 5 wt.-% of the copolymer mass. More preferably, the copolymer (a) does not contain any further methacrylate derivative other than MMA or methacrylic acid. Particularly preferably, the copolymer (a) does not contain any further methacrylate derivative other than MMA.

Optionally, the copolymer (a) according to the present invention may also contain one or more cross-linking moiety/moieties such as, e.g., divinylbenzene, in its polymer strand. Preferably, such cross-linking agents constitute for not more than 25 wt.-% of the copolymer mass, more preferably not more than 10 wt.-% of the copolymer mass, often not more than 5 wt.-% of the copolymer mass. Preferably, the copolymer (a) does not contain any cross-linking moieties.

The copolymer (a) according to the present invention may bear a linear, circular or branched structure. A circular structure is a copolymer strand wherein both ends are connected with another. As used herein, the term "branched structure" may be understood in the broadest sense as any structure deviating from a plain linear or circular structure. Accordingly, in a polymer of branched structure, there is at least one monomer binding to three or more other monomer(s). Preferably, the copolymer (a) of the present invention is an essentially linear or circular copolymer, more preferably an essentially linear copolymer, in particular a linear random copolymer.

The thermoplastic composition (P) is transparent or at least partly transparent. In particular, when the thermoplastic composition (P) is once heated above the glass transition temperature Tg, subsequently molded and finally cooled below the glass transition temperature Tg, the obtained molding is transparent or at least partly transparent. The Tg-value of the thermoplastic composition (P) can be determined by classical methods.

As used throughout the present invention, the term "transparent" may be understood in the broadest sense as ability of letting light pass through.

Preferably, transparency means, that, at a thickness of a sample of 1/8 inch (3.175 mm), at least 70 %, preferably of at least 80 %, more preferably of at least 85 %, more preferably of at least 90 %, of visible light passes through. Particularly preferably, transparency means that, in a sample of 0.5 mm, 1 mm, 3.175 mm, 5 mm or even 1 cm, at least 70 %, preferably at least 80 %, more preferably at least 85 %, more preferably at least 90 % of visible light passes through. In some preferred embodiments, light having certain wavelengths outside the visible light spectrum, e.g. starting above 380 nm or up to 800 nm, also passes through, to an extent of at least 70 %, preferably at least 80 %, more preferably at least 85 %, more preferably at least 90 %. Accordingly, in some preferred embodiments, at least 70 %, preferably at least 80 %, more preferably at least 85 %, more preferably at least 90 % of all light in the range from 380 nm to 800 nm passes through a sample having a thickness of 1/8 inch (3.175 mm).

Preferably the obtained thermoplastic composition (P) is transparent when a shaped article obtained therefrom is more than 0.5 mm, preferably more than 1 mm, more preferably more than 2 mm, often from 3.175 mm to 10 mm thick. The light transmittance for visible light, at a layer thickness of 3.175 mm preferably is higher than 85 %, often higher than 90 %., measured according to ASTM D1003 using CIE illuminant C.

As used herein, methyl methacrylate (MMA) (a2) is understood in the broadest sense. Herein, the terms "methyl methacrylate", "methyl methacrylate moiety", "methyl methacrylate monomer", "methyl methacrylate monomer moiety", and similar terms are understood interchangeably.

As used herein, a vinylaromatic monomer (a1) may be understood in the broadest sense as any as any moiety bearing at least one vinyl residue (-CH=CH₂) in its monomeric form and at least one monocyclic or polycyclic aromatic residue known in the art. The person skilled in the art will notice that upon polymerization, the double bond of the vinyl residue is cleaved and is thereby embedded into the polymeric strand. In accordance with international common designation standards, the monomeric moiety as well as the moiety embedded into the polymeric strand is designated as vinylaromatic monomer. Herein, the terms "vinylaromatic", "vinylaromatic moiety", "vinylaromatic monomer", "vinylaromatic monomer moiety", "aromatic vinyl", "aromatic vinyl moiety", "aromatic vinyl monomer", "aromatic vinyl monomer moiety" and similar terms may be understood interchangeably. Preferably, the vinylaromatic monomer bears one vinyl residue (-CH=CH₂) and one monocyclic or polycyclic aromatic residue.

More preferably, the vinylaromatic monomer bears one vinyl residue (-CH=CH₂) and one monocyclic aromatic residue, such as styrene.

In a preferred embodiment, the one or more vinylaromatic monomers (a1) comprise(s) styrene and/or one or more styrene derivative(s). As used herein, a styrene derivative may be any derivative of styrene known in the art such as, e.g.
alkylated styrene (e.g., alpha-methylstyrene, alpha-ethylstyrene, 2-methylstyrene, 3-methylstyrene, 4-methylstyrene, 2-ethylstyrene, 3-ethylstyrene, 4-ethylstyrene, 2,3-dimethylstyrene, 2,4-dimethylstyrene, 2,5-dimethylstyrene, 2,6-dimethylstyrene,2,3-diethylstyrene, 2,4-diethylstyrene, 2,5-diethylstyrene, 2,6-diethylstyrene, 2-methyl-3-ethylstyrene,2-methyl-4-ethylstyrene, 2-methyl-5-ethylstyrene, 2-methyl-6-ethylstyrene, 3-methyl-2-ethylstyrene, 3-methyl-4-ethylstyrene, 3-methyl-5-ethylstyrene, 3-methyl-6-ethylstyrene,4-methyl-5-ethylstyrene, 4-methyl-6-ethylstyrene, 2-ethyl-3-methylstyrene, 2-ethyl-4-methylstyrene, 2-ethyl-5-methylstyrene, 2-ethyl-6-methylstyrene, 3-ethyl-4-methylstyrene, 3-ethyl-5-methylstyrene, 3-methyl-6-ethylstyrene, 4-ethyl-5-methyl-styrene, 4-ethyl-6-methylstyrene), halogenated styrene (e.g., e.g., 2-chloro-styrene, 3-chloro-styrene, 4-chloro-styrene, 2-fluoro-styrene, 3-fluoro-styrene, 4-fluoro-styrene, 2,3-di-chloro-styrene, 2,4-di-chloro-styrene, 2,5-di-chloro-styrene, 2,6-di-chloro-styrene,2,3-di-fluoro-styrene, 2,4-di-fluoro-styrene, 2,5-di-fluoro-styrene, 2,6-di-fluoro-styrene, 2-chloro-3-fluoro-styrene, 2-chloro-4-fluoro-styrene, 2-chloro-5-fluoro-styrene, 2-chloro-6-fluoro-styrene, 3-chloro-2-fluoro-styrene, 3-chloro-4-fluoro-styrene, 3-chloro-5-fluoro-styrene, 3-chloro-6-fluoro-styrene, 4-chloro-5-fluoro-styrene, 4-chloro-6-fluoro-styrene, 2-fluoro-3-chloro-styrene, 2-fluoro-4-chloro-styrene, 2-fluoro-5-chloro-styrene, 2-fluoro-6-chloro-styrene, 3-fluoro-4-chloro-styrene, 3-fluoro-5-chloro-styrene, 3-chloro-6-fluoro-styrene, 4-fluoro-5-chloro-styrene, 4-fluoro-6-chloro-styrene) or hydroxystyrene styrene (e.g., 2-hydroxystyrene, 3-hydroxystyrene, 4-hydroxystyrene, 2,3-dihydroxystyrene, 2,4-dihydroxystyrene, 2,5-dihydroxystyrene, 2,6-dihydroxystyrene).

Particularly preferably, the one or more vinylaromatic monomer according to the present invention is alpha-methylstyrene or styrene, in particular styrene.

In a preferred embodiment, the one or more vinylaromatic monomers (a1) comprise styrene.

In a more preferred embodiment, the one or more vinylaromatic monomers (a1) comprise at least 50 wt.-% styrene, preferably at least 70 wt.-% styrene, more preferably at least 80 wt.-% styrene, more preferably at least 90 wt.-% styrene, based on the total weight of (a1). In a preferred embodiment, the only vinylaromatic monomer (a1) in said copolymer (a) is styrene.

It is preferable that the copolymer (a) comprises 40 to 70 wt.-% of repeating units derived from vinylaromatic monomers (a1), in particular styrene, and 30 to 60 wt.-% of repeating units derived from methyl methacrylate (a2); more preferable that it comprises 50 to 69 wt.-% of repeating units derived from vinylaromatic monomers (a1), in particular styrene, and 31 to 50 wt.-% of repeating units derived from methyl methacrylate (a2); more preferable that it comprises 51 to 65 wt.-% of repeating units derived from vinylaromatic monomers (a1), in particular styrene, and 35 to 49 wt.-% of repeating units derived from methyl methacrylate (a2); even most preferred that it comprises 52 to 60 wt.-% of repeating units derived from vinylaromatic monomers (a1), in particular styrene, and 40 to 48 wt.-% of repeating units derived from methyl methacrylate (a2), based on the total weight of copolymer (a).

Preferably, the copolymer does not comprise any further monomer moieties than MMA and one or more, preferably one, vinylaromatic monomers, in particular styrene. Thus, preferred copolymer (a) consists of repeating units derived from vinylaromatic monomers (a1), in particular styrene, and of repeating units derived from methyl methacrylate (a2) in the afore-mentioned amounts.

Therefore, preferred are thermoplastic compositions (P) as afore-mentioned, wherein copolymer (a) consists of 31 to 50 wt.-%, preferably 35 to 49 wt.-%, more preferably 40 to 48 wt.-%, based on the total weight of copolymer (a), of repeating units derived from methyl methacrylate (a2), and 50 to 69 wt.-%, preferably 51 to 65 wt.-%, more preferably 52 to 60 wt.-%, based on the total weight of copolymer (a), of repeating units derived from styrene.

In general, a copolymer (a) according to the present invention may be obtained by any means suitable therefore known in the art. The person skilled in the art knows numerous methods suitable for obtaining such copolymer (a). Well-known conventional polymerization procedures may be employed in the preparation of such copolymer (a) according to the present invention.

Component (a) is e.g. obtained in a known manner by bulk, solution, suspension, precipitation or emulsion polymerization. Details of these processes are described, for example, in Kunststoffhandbuch, ed. R. Vieweg and G. Daumiller, Vol. V "Polystyrol", Carl-Hanser-Verlag Munich, 1969, p. 118 ff.

Exemplarily, the copolymer (a) may be prepared by emulsion polymerization, solution polymerization or bulk polymerization. Preferably, heat or radical initiation may be used (including living polymerization methods).

Methyl methacrylate (MMA) monomers (a) as well as numerous vinylaromatic monomers are commercially available. Others can be easily obtained by standard chemical processes. As indicated above, a vinyl monomer is characterized by its vinyl group (-CH=CH₂) in its monomeric form. Therefore, vinyl monomers may also be obtained from precursor molecules. Exemplarily, precursor molecules bearing an ethyl residue (-CH₂-CH₃) may be oxidized/ dehydrated, halogenated precursor molecules bearing a haloge-nethyl residue (e.g., -CHCl-CH₃, -CH₂-CH₂Cl) may be dehalogenated by eliminating the respective acid (e.g., HCl) or hydroxylated precursor molecules bearing a hydroxyethyl residue (e.g., -CHOH-CH₃, -CH₂-CH₂OH) may be dehydrogenated by eliminating water (e.g., H₂O). Then, the respective vinyl monomers are obtainable.

Copolymerization for the preparation of copolymer (a) may optionally be carried out in the presence of, e.g., one or more solvent(s) and/or one or more initiator(s) (e.g., one or more radical starter(s)).

The initiation of copolymerization may e.g. be started by thermal decomposition of an initiator (e.g an organic peroxide (e.g., dicumyl peroxide) or an azo compound), photolysis (e.g., with metal iodides, metal alkyls or azo compounds (e.g., azoisobutylnitrile (AIBN))), a peroxide initiator (e.g., benzoyl peroxide), an initiator composition enabling a redox reaction (e.g., reduction of hydrogen peroxide or an alkyl hydrogen peroxide by means of iron ions or other reductants such as, e.g, Cr²⁺, V²⁺, Ti³⁺, Co²⁺ or Cu⁺), persulfate activation, ionizing radiation (e.g., by means of α-, β-, γ- or x-rays), electrochemical activation, plasma activation, sonication (e.g., at around 16 kHz) or a ternary Initiator (e.g., benzoyl peroxide-3,6-bis(o-carboxybenzoyl)-N-isopropylcarbazole-di-η5-indenyl**zicronium** dichloride optionally in combination with a metallocene (e.g., indenylzirconium) and/or a peroxide (e.g., benzoyl peroxide).

In a preferred embodiment, the copolymerization comprises heating of the reaction mixture comprising the monomers above a temperature above 100°C and/or adding one or more polymerization initiator(s) to said reaction mixture.

The reaction mixture can be maintained or brought to conditions allowing chain elongation of the polymer. For instance, the temperature is set according to the monomer/copolymer content of the reaction mixture. Exemplarily, as indicated above, the temperature may optionally also be varied during incubation, such as, e.g., constantly or stepwise increased during the polymerization process.

Exemplarily, methods for producing copolymer (a) of the present invention may be used as shown in any of GB 464688, GB 531956, GB 863279 and WO 2003/051973.

### Hindered amine light stabilizer (HALS) combination (component b)

As component (b) a combination of at least two hindered amine light stabilizers (HALS) is used which consists of: (b1) at least one high molecular weight hindered amine light stabilizer (HMw-HALS) having a number average molecular weight (Mn) of ≥ (equal to or greater than) 1800 g/mol, preferably ≥ 1900 g/mol; more preferably ≥ 2000 g/mol, and (b2) at least one low molecular weight hindered amine light stabilizer (LMw-HALS) having a number average molecular weight (Mn) of ≤ (equal to or less than) 1000 g/mol, preferably ≤ 900 g/mol, more preferably ≤ 800 g/mol.

The hindered amine light stabilizers used in the thermoplastic composition (P) according to the invention are generally based on 2,2,6,6-tetramethyl-piperidine derivatives, in particular derivatives of 2,2,6,6-tetramethyl-4-piperidyl-substituted organic compounds. LMw-HALS compounds (b2) are mostly composed of one or two units comprising a 2,2,6,6-tetramethyl-piperidine group.

HMw-HALS compounds (b1) mostly are (oligomeric) reaction products based on 2,2,6,6-tetramethyl-piperidine derivatives, often (oligomeric) reaction products based on 2,2,6,6-tetramethyl-piperidine derivatives and 1,3,5-triazine derivatives.

The number average molecular weight (Mn) of the HMw-HALS (b1) often is in the range of 1800 to 15000 g/mol, preferably in the range of 1900 g/mol to 10000 g/mol; more preferably in the range of 2000 to 5000 g/mol.

Suitable compounds which may be used as HMw-HALS (b1) are one or more compounds selected from the group consisting of:
poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) (MW: 2000-3200 g/mol, e.g. Chimassorb^{®} 944); 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (MW: ~ 2300 g/mol, e.g. Chimassorb 119); N,N'-Bis(2,2,6,6-tetramethyl-4-piperidinyl)-1,6-hexanediamine polymer with 2,4,6-trichloro-1,3,5-triazine reaction products with N-butyl-1-butanamine and N-butyl-2,2,6,6-tetramethyl-4-piperidinamine (MW: 2600 - 3400 g/mol, CAS 192268-64-7, e.g. Chimassorb 2020); 4-Hydroxy-2,2,6,6-tetramethyl-1-piperidinethanol-dimethyl succinate copolymer (MW: 3100-4200 g/mol, e.g. Lowilite^{®} 62); Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] (MW: 2000 - 3300 g/mol, e.g. Lowilite 94); and 1,2,3,4-Butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester (MW: ~ 2000 g/mol, CAS 101357-36-2, e.g. Amfine^{®} LA-63).

Preferred as HMw-HALS (b1) are oligomeric reaction products of a 2,2,6,6-tetramethyl-4-piperidyl-substituted organic compound (includes its derivatives) and a 1,3,5-triazine derivative, such as in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]).

Suitable compounds which may be used as LMw-HALS (b2) are one or more compounds selected from the group consisting of:
Bis(1-octyloxy-2,2,6,6-tetramethyl-4-piperidyl)sebacate (e.g. Tinuvin^{®} 123);
Bis(1,2,2,6,6-pentamethyl-4-piperidyl) [[3,5-bis(1,1-dimethylethyl)-4 hydroxyphenyl]methyl]butylmalonate (e.g. Tinuvin 144); Bis(2,2,6,6,-tetramethyl-4-piperidyl)sebacate (e.g. Tinuvin 770); Methyl 1,2,2,6,6-pentamethyl-4-piperidyl sebacate, Bis(1,2,2,6,6-pentamethyl-4-piperidinyl)-2-(4-methoxy- benzylidene)malonate; N,N'-bisformyl-N,N'-bis-(2,2,6,6-tetramethyl-4-piperidinyl)- hexamethylendiamine (e.g. Uvinul^{®} 4050);
Bis(1,2,2,6,6-pentamethyl-4-piperidinyl)-2-(4-methoxy-benzylidene)malonate (e.g. Hostavin^{®}); Bis(1,2,2,6,6-pentamethyl-4-piperidyl)sebacate (e.g. Afmine^{®} LA-72); 2,2,6,6-Tetramethyl-4-piperidinyl stearate (e.g. Cyasorb^{®} UV3853); 4-Piperidinol-2,2,6,6-tetramethyl-1-(undecyloxy)-4,4'-carbonate (e.g. Amfine^{®} LA-81); 2,2,6,6-Tetramethyl-4-piperidinol (e.g. Lastar^{®} A); 2,2,6,6-Tetramethyl-4-piperidinyl hexadecanoate; and 2,2,6,6-Tetramethyl-4-piperidinyl octadecanoate; and mixtures thereof, in particular a mixture of Bis(1,2,2,6,6-pentamethyl-4-piperidyl)sebacate and Methyl 1,2,2,6,6-pentamethyl-4-piperidyl sebacate (e.g. Tinuvin 292); a mixture of Bis(1,2,2,6,6-pentamethyl-4-piperidinyl)-2-(4-methoxy- benzylidene)malonate and Methyl 1,2,2,6,6-pentamethyl-4-piperidyl sebacate (e.g. Tinuvin 765); and a mixture of 2,2,6,6-Tetramethyl-4-piperidinyl hexadecanoate and 2,2,6,6-Tetramethyl-4-piperidinyl octadecanoate (e.g. Addworks^{®} ATR 945 mp).

Preferably the at least one LMw-HALS (b2) is a derivative of a bis(2,2,6,6-tetramethyl-4-piperidyl)dicarboxylic acid diester, in particular preferred is bis(2,2,6,6,-tetramethyl-4-piperidyl)sebacate.

In the thermoplastic composition (P) according to the invention the at least one, preferably one, HMw-HALS (b1) and the at least one, preferably one, LMw-HALS (b2) are generally used in a weight ratio (b1):(b2) of from 12:1 to 1:2, more preferably from 6:1 to 1.5:2, more preferably from 4:1 to 1:1, in particular from 3:1 to 1:1. Particularly preferably, no further HALS except for (b1) and (b2) are present in component (b).

### UV absorber (c)

As the at least one organic UV absorber (c) (= component (c)) two or more compounds are used, wherein at least one, preferably one UV absorber (c1) has a peak absorption at a wavelength from 310 nm to 380 nm, and at least one, preferably one UV absorber (c2) has a peak absorption at a wavelength from 260 nm to less than 310 nm, measured by UV/VIS spectroscopy. Particularly preferably, no further UV absorbers other than (c1) and (c2) are present in component (c).

In the present context, peak absorption refers to the absorption maximum with the highest absorbance (i.e. absolute maximum) in the UV/VIS spectrum, when measured in a chloroform solution of the respective UV absorber at a concentration of 10mg/L.

The UV absorbers (c1) and (c2) are preferably selected from the group consisting of substituted benzotriazoles, substituted benzophenones, substituted triazines, oxalanilides, substituted resorcinols, salicylates and cyanoacrylates, more preferably from the group consisting of 2-(2-hydroxyphenyl) benzotriazoles, 2-hydroxy-benzophenones and hydroxyphenyl-s-triazines, which fulfill the peak absorption wavelength requirements.

For example, the at least one UV absorber (c1) having a peak absorption at a wavelength from 310 nm to 380 nm may be selected from the group consisting of 2-(2-hydroxyphenyl) benzotriazoles and 2-hydroxy-benzophenones, and the at least one UV absorber (c2) having a peak absorption at a wavelength from 260 nm to less than 310 nm may be selected from the group consisting of hydroxyphenyl-s-triazines and other triazines.

Preferably, (c1) is a 2-(2-hydroxyphenyl) benzotriazole and (c2) is hydroxyphenyl triazine. More preferably, (c1) is 2-(2H-benzotriazol-2-yl)-4-(1,1,3,3-tetramethylbutyl)phenol, which is, e.g., commercially available as "Tinuvin^{®} 329" (BASF) and has a peak absorption at 343 nm, and (c2) is 2-(4,6-diphenyl-1,3,5-triazin-2-yl)-5-hexyloxy phenol, which is, e.g., commercially available as "Tinuvin^{®} 1577" (BASF) and has a peak absorption at 274 nm.

Furthermore, the weight ratio (c1):(c2) is preferably from 8:1 to 1:4, more preferably from 6:1 to 1:2, more preferably from 4:1 to 2:3, more preferably from 3:1 to 1.5:2, more preferably from 2:1 to 1:1.

The weight ratio (b):(c) in the composition of the invention is preferably from 5:1 to 1:5, more preferably from 4:1 to 1:2, more preferably from 3:1 to 1:1, more preferably from 3:1 to 4:3.

Furthermore, the total weight of UV additives (b) and (c) is preferably 1.5 wt.-% or less, more preferably 1.2% or less, more preferably 1.0% or less, based on the total weight of the thermoplastic composition (P).

Preferred is a thermoplastic composition (P) as afore-mentioned, wherein the weight ratio (b1):(b2) is from 12:1 to 1:2, preferably from 6:1 to 1.5:2, more preferably from 4:1 to 1:1 more preferably from 3:1 to 1:1, the weight ratio (c1):(c2) is from 6:1 to 1:2, preferably from 4:1 to 2:3, more preferably from 3:1 to 1.5:2, more preferably from 2:1 to 1:1, and the weight ratio (b):(c) is from 5:1 to 1:5, preferably from 4:1 to 1:2, more preferably from 3:1 to 1:1, more preferably 3:1 to 4:3.

Preferred are thermoplastic compositions (P) comprising:
as HMw-HALS (b1) an oligomeric reaction product of a 2,2,6,6-tetramethyl-4-piperidyl-substituted organic compound (including its derivatives) and a 1,3,5-triazine derivative, in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]);
as LMw-HALS (b2) a bis(2,2,6,6-tetramethyl-4-piperidyl)dicarboxylic acid diester (including its derivatives), in particular bis(2,2,6,6-tetramethyl-4-piperidyl)sebacate;
a UV absorber (c1), having a peak absorption at a wavelength from 310 nm to 380 nm, measured by UV/VIS spectroscopy, in particular 2-(2H-benzotriazol-2-yl)-4-(1,1,3,3-tetramethylbutyl)phenol, (e.g. "Tinuvin^{®} 329" from BASF; CAS-RN: 3147-75-9); and
a UV absorber (c2), having a peak absorption at a wavelength from 260 nm to less than 310 nm, measured by UV/VIS spectroscopy, in particular 2-(4,6-diphenyl-1,3,5-triazin-2-yl)-5-hexyloxy phenol (e.g. "Tinuvin^{®} 1577" from BASF; CAS-RN: 147315-50-2).

### Additives (d)

Optionally the thermoplastic composition (P) according to the invention may comprise up to 2.0 wt.-%, preferably up to 1.0 wt.-%, more preferably up to 0.5 wt.-%, more preferably up to 0.3 wt.-%, based on the total weight of the thermoplastic composition (P), of at least one further additive (d) (= component (d)), which is different from HALS and UV absorbers. Preferably, the at least one further additive (d) does not contain any pigments or fillers.

The amount of component (d), if present, is preferably at least 0.01 wt.-%, more preferably at least 0.02 wt.-%, more preferably at least 0.05 wt.-%, particularly preferably at least 0.1 wt.-%, based on the total weight of the thermoplastic composition (P).

Suitable additives (d) include all substances customarily employed for processing or finishing the polymers, except of pigments and fillers (see e.g. "Plastics Additives Handbook", Hans Zweifel, 6th edition, Hanser Publ., Munich, 2009).

Exemplarily, an additive may be a stabilizer for improving thermal stability, a stabilizer for enhancing hydrolysis resistance and chemical resistance, a process stabilizer, a radical scavenger, an antioxidant, an anti-thermal decomposition agent, a glossing agent, a metal deactivator, an antistatic agent, a flow agent, an anti-sticking agent, metal ions, a flame retardant, a dispersing agent, a dye, and/or a (external/internal) lubricant.

These additives may be admixed at any stage of the manufacturing operation, but preferably at an early stage in order to profit early on from the stabilizing effects (or other specific effects) of the added substance.

Preferably component (d) is at least one lubricant and/or at least one antioxidant. More preferably, component (d) is at least one antioxidant.

Suitable lubricants (glidants/demolding agents) include stearic acids, stearyl alcohol, stearic esters, amide waxes (bisstearylamide, in particular ethylenebisstearamide (EBS)), polyolefin waxes and/or generally higher fatty acids, derivatives thereof and corresponding fatty acid mixtures comprising 12 to 30 carbon atoms.

Suitable antioxidants are, e.g., one or more compounds selected from monophosphite-based antioxidants, diphosphite-based antioxidants and sterically hindered phenolic antioxidants. If one or more antioxidants are present, they are preferably selected from monophosphite-based antioxidants, such as trisubstituted monophosphite derivatives, diphosphite-based antioxidants, such as substituted pentaerythrirol diphosphite derivatives and sterically hindered phenolic antioxidants, such as 2,6-di-tertbutylphenolic derivatives. More preferably, the antioxidant used as component (d) is one or more compounds selected from tri-phenyl substituted monophosphite derivatives, di-phenyl substituted pentaerythritol diphosphite derivatives and mono-substituted 2,6-di-tert-butylphenolic derivatives. In particularly preferred embodiments, the one or more antioxidants are one or more of tris(2,4-di-tert-butylphenyl)phosphite, bis(2,4-di-tert-butylphenyl)pentaerythritol diphosphite and octadecyl-3-[3,5-di-tert-butyl-4-hydroxyphenyl]propionate.

In preferred embodiments, the thermoplastic composition (P) according to the invention consists of the components (a), (b), (c) and optionally (d).

Preferably, the thermoplastic composition (P) of the invention comprises, more preferably consists of:
(a) 95 to 99.96 wt.-%, preferably 97 to 99.92 wt.-%, more preferably 98 to 99.9 wt.-%, more preferably 99 to 99.8 wt.-% based on the total weight of the thermoplastic composition (P), of the at least one copolymer (a);
(b1) 0.01 to 0.8 wt.-%, preferably 0.02 to 0.7 wt.-%, more preferably 0.05 to 0.6 wt.-%, more preferably 0.1 to 0.3 wt.-% based on the total weight of the thermoplastic composition (P), of the at least one HMw HALS (b1);
(b2) 0.01 to 0.7wt.-%, preferably 0.02 to 0.6 wt.-%, more preferably 0.05 to 0.4 wt.-%, more preferably 0.1 to 0.3 wt.-%, based on the total weight of the thermoplastic composition (P), of the at least one LMw HALS (b2);
(c1) 0.01 to 0.8 wt.-%, preferably 0.02 to 0.5 wt.-%, more preferably 0.05 to 0.3 wt.-%, more preferably 0.1 to 0.2 wt.-%, based on the total weight of the thermoplastic composition (P), of the at least one UV absorber (c1) having a peak absorption at a wavelength from 310 nm to 380 nm;
(c2) 0.01 to 0.7 wt.-%, preferably 0.02 to 0.5 wt.-%, more preferably 0.05 to 0.3 wt.-%, more preferably 0.1 to 0.2 wt.-%, based on the total weight of the thermoplastic composition (P), of the at least one UV absorber (c2) having a peak absorption at a wavelength from 260 nm to less than 310 nm;
(d) optionally up to 2.0 wt.-%, preferably up to 1.0 wt.-%, more preferably up to 0.5 wt.-%, more preferably up to 0.3 wt.-% of at least one further additive (d) different from HALS and UV absorbers.

As indicated above, a further aspect of the invention is a process for the preparation of a thermoplastic composition (P) according to the invention by mixing copolymer (a) with HMw-HALS (b1), LMw-HALS (b2), UV absorber (c1) having a peak absorption at a wavelength from 310 nm to 380 nm, UV absorber (c2) having a peak absorption at a wavelength from 260 nm to less than 310 nm, and, if present, at least one further additive (d).

Component (b) comprising HMw-HALS (b1) and LMw-HALS (b2) can be added to copolymer (a) by separate addition of HMw-HALS (b1) and LMw-HALS (b2), or by addition of a mixture of both.

Furthermore, Component (c) comprising UV absorber (c1) having a peak absorption at a wavelength from 310 nm to 380 nm and UV absorber (c2) having a peak absorption at a wavelength from 260 nm to less than 310 nm, can be added to copolymer (a) by separate addition of UV absorber (c1) and UV absorber (c2), or by addition of a mixture of both.

Preferably, in the process according to the invention, copolymer (a) is provided in a molten state and components (b), (c) and, if present, (d) are added to a melt of copolymer (a).

Components (b), (c) and, if present, (d) may be added to the copolymer (a) in their pure form, or admixed thereto as masterbatches or as a single masterbatch in a polymeric carrier. Preferably, components (b), (c) and, if present, (d), are added to the copolymer (a) as one or more masterbatches in a polymeric carrier.

When components (b), (c) and, if present, (d) are added as one or more masterbatches in a polymeric carrier, the polymeric carrier preferably comprises, more preferably consists of copolymer (a). Also, the concentration of the respective component(s) in the polymeric carrier is preferably from 20 to 80 wt.-%, more preferably from 25 to 60 wt.-%, more preferably from 30 to 50 wt.-%, based on the total weight of the respective masterbatch.

Where components (b), (c) and, if present, (d) are added as a masterbatch, their amounts based on the total weight of the thermoplastic composition (P), as specified above, refer to the respective pure component, and not to the masterbatch. Furthermore, where the polymeric carrier comprises or consists of copolymer (a), the amount of copolymer (a) in the masterbatch is counted towards the amount of copolymer (a) based on the total weight of the thermoplastic composition (P), as specified above. For example, a thermoplastic composition prepared from 96 wt.-% of copolymer (a), 2 wt.-% of a masterbatch of component (b) (50 wt.-% in copolymer (a)), and 2 wt.-% of a masterbatch of component (c) (50 wt.-% in copolymer (a)) corresponds to a thermoplastic composition (P) consisting of 98 wt.-% of copolymer (a), 1 wt.-% of component (b) and 1 wt.-% of component (c).

The mixing of the components can be performed by suitable means such as e.g. a mixer, a kneader or an extruder, preferably a twin screw extruder.

Preferably, if antioxidants are present as component (d), they are added to copolymer (a) separately from components (b), (c) and any further optional additives used as component (d). More preferably components (b), (c) and optional further additives used as component (d) are introduced into the thermoplastic composition (P) during secondary compounding, whereas antioxidants, if present, are introduced into the reactor during the polymerization of copolymer (a).

The thermoplastic composition (P) according to the present invention may be used to produce a shaped article therefrom.

Thus, a further aspect of the invention is a process for the preparation of a shaped article comprising the thermoplastic composition (P) according to the invention wherein the shaped article is formed by extrusion, injection molding, casting, blow molding, spraying, spinning, rolling or weaving, in particular extrusion or injection molding.

In this context, the person skilled in the art will know several means for producing one or more of such shaped articles from such molding compositions. Producing a shaped article may e.g. be performed by extrusion, injection molding, casting, blow molding, spraying, spinning, rolling, weaving, forming a suspension from an emulsion etc. or a combination of two or more thereof. The person skilled in the art will know which method(s) to apply for producing the respective shaped article.

The person skilled in the art will also notice that a shaped article in the sense of the present invention may be obtained from at least one thermoplastic composition (P) according to the present invention, which molding composition may either be a melt or present as a raw material for molding processes (e.g. in the form of pellets, powder and/or blocks) or may be dissolved in a suitable solvent.

Accordingly, a further aspect of the present invention relates to a shaped article comprising (or consisting of) a thermoplastic composition (P) according to the present invention.

Thermoplastic compositions (P) according to the invention and shaped articles thereof are generally transparent or at least partly transparent. Thermoplastic compositions (P) according to the invention and shaped articles thereof in particular have a high outdoor UV stability. As outlined above, the outdoor UV stability testing is conducted according to SAE J2527 (issued 2004-02) through SAE J1960 at a radiant exposure of 5000 kJ/m² with Xenon irradiance (wavelength 340 nm) of 0.55 W/m² at 70 °C for light cycle and 38°C for dark cycle.

As outlined above, the term "high outdoor UV stability" means that after outdoor stability testing as described above, the yellowness index according to ASTM method E313 (test specimens of 3.125 mm (1/8) inch thickness) increases by less than 1.3, preferably less than 1.0, more preferably less than 0.89 (measured from the CIE color space values using a D65 light source (observation angle 10°) according to ASTM E1348:2015), and the term "good optical properties" means that the haze of the thermoplastic composition before outdoor stability testing as described above is 1.5% or less, preferably 1.2% or less (measured according to ASTM D1003 using CIE illuminant C, test specimens of 3.125 mm (1/8 inch) thickness).

Accordingly, a further aspect of the invention is the use of a thermoplastic composition (P) according to the invention and of shaped articles comprising it for outdoor applications, preferably for applications in the construction and automotive sector, in particular for exterior automotive parts, such as e.g. exterior rear combination lamps.

Yet another aspect of the invention is the use of components (a), (b), (c) and optionally (d), as defined above in the amounts specified above, for the preparation of a thermoplastic composition (P) or a shaped article with following properties:
(i) haze of less than 1.5%, measured according to ASTM D 1003 for a specimen having a thickness of 3,175 mm (1/8 inch); and
(ii) a weathering resistance, which is characterized in that:
after outdoor stability testing according to SAE J2527 (issued 2004-02) through SAE J1960 at a radiant exposure of 5000 kJ/m² (Xenon irradiance (340 nm) of 0.55 W/m²), the yellowness index according to ASTM method E313 (test specimens of 3.125 mm (1/8) inch thickness) increases by less than 1.3, preferably less than 1.0, more preferably less than 0.89 (measured from the CIE color space values using a D65 light source (observation angle 10°) according to ASTM E1348:2015).

The invention is further outlined by the following examples and the patent claims.

### Examples

UV stability testing was conducted according to SAE 2527 through SAE 1960 with xenon irradiance (340 nm) of 0.55 W/m² at 70°C for light cycle and 38°C for dark cycle.

Haze was measured for 1/8" (3.125 mm) thickness specimen according to ASTM D 1003.

YI was calculated according to ASTM E313 from measured CIE L*a*b* color space values.

CIE color space values measured using a D65 light source (observation angle 10°) according to ASTM E1348.

### Preparation of the thermoplastic resin compositions

A continuous feed of 55 wt.-% (a1) styrene and 45 wt.-% (a2) methyl methacrylate - each based on the total weight of (a1) and (a2), a free radical initiator, and antioxidants (0.1 wt.-% Irgafos^{®} 126 and 0.03 wt.-% Irganox^{®} 1076, each based on the entire molding composition) were added to a stirred tank reactor at a temperature of 150 °C. The polymerization reaction was thermally initiated and conducted to a conversion in the range of 60 to 85 %.

The copolymer product stream leaving the polymerization reactor was sent to a preheater, then to a devolatizer to remove volatile components from the molten polymer. The devolatizer operates at temperatures of from 200 to 245 °C and a pressure less than 20 mbar.

Then, at a temperature of 210 °C the obtained copolymer (a) was compounded in a twin screw extruder with (b1) a high molecular weight hindered amine light stabilizer (Chimassorb^{®} 944, Ciba, Mn = 2000-3100 g/mol, CAS-RN: 71878-19-8), (b2) a low molecular weight hindered amine light stabilizer (Tinuvin^{®} 770 DF, BASF, Mn = 480.7 g/mol, CAS-RN: 52829-07-9), (c1) a UV-absorber with a peak absorption at a wavelength of 343 nm (Tinuvin^{®}329, BASF, CAS-RN: 3147-75-9), and (c2) a UV absorber with a peak absorption at a wavelength of 274 nm (Tinuvin^{®} 1577, BASF, CAS-RN: 147315-50-2) in the amounts as shown in the Table 1 below, and an EBS wax (0.05 wt.-%, based on the entire molding composition).

The obtained SMMA copolymer molding composition was injection molded into the desired shaped article (preparation of various test specimens of 1/8 inch (3.175 mm) thickness).

The obtained test specimens were subjected to haze measurement according to ASTM D 1003, and then to an (outdoor) UV stability test according to SAE J2527 through SAE J1960 at a radiant exposure of 5000 kJ/m² with Xenon irradiance (wavelength 340 nm) of 0.55 W/m² at 70 °C for light cycle and 38°C for dark cycle. Under these conditions, the CIE L*a*b* color space values and yellowness index (YI) calculated from the CIE color space values were measured before (initial) and after (final) exposure, to examine the UV-induced change in yellowness (Δ YI) and b* value (Δ b*). The experimental results are shown in Table 1 below.

**Table 1 Haze and color stability tests of SMMA copolymer compositions (or articles) with different combinations of HALS and UV-absorbers**

| | | Example # | | | | | | | |
|---|---|---|---|---|---|---|---|---|---|
| | Units | 1 | 2 | 3 | 4 | 5 | 6 | 7 | 8 |
| HMw HALS (b1) | ppm | 1500 | 1500 | 3000 | 3000 | 3000 | 3000 | 3000 | 3000 |
| LMw HALS (b2) | ppm | 2000 | 500 | 2000 | 500 | 2000 | 500 | 3000 | 1000 |
| UV Absorber (c1) | ppm | 500 | 500 | 1000 | 1000 | 1500 | 1500 | 1500 | 1500 |
| UV Absorber (c2) | ppm | 500 | 500 | 1000 | 1000 | 500 | 500 | 1500 | 1500 |
| Total (b)+(c) | wt.-% | 0.45 | 0.30 | 0.70 | 0.55 | 0.70 | 0.55 | 0.90 | 0.70 |
| Starting Haze | % | 1.5 | 0.9 | 1.0 | 1.1 | 1.0 | 0.9 | 1.2 | 1.0 |
| Initial b* | unitless | 0.65 | 0.62 | 0.72 | 0.85 | 0.78 | 0.69 | 0.99 | 1.07 |
| Final b* | unitless | 1.29 | 1.30 | 1.29 | 1.31 | 1.26 | 1.21 | 1.38 | 1.43 |
| Δ b* | unitless | 0.64 | 0.68 | 0.57 | 0.46 | 0.48 | 0.52 | 0.39 | 0.36 |
| Initial YI | unitless | 1.17 | 1.09 | 1.25 | 1.44 | 1.34 | 1.19 | 1.67 | 1.78 |
| Final YI | unitless | 2.32 | 2.34 | 2.29 | 2.31 | 2.23 | 2.18 | 2.47 | 2.46 |
| Δ YI | unitless | 1.15 | 1.25 | 1.04 | 0.87 | 0.89 | 0.99 | 0.80 | 0.68 |

**Table 1 continued.**

| | | Example # | | | | | | |
|---|---|---|---|---|---|---|---|---|
| | Units | 9 | 10 | 11 | 12 | 13 | 14 | 15 |
| HMw HALS (b1) | ppm | 3000 | 3000 | 6000 | 6000 | 6000 | 6000 | 6000 |
| LMw HALS (b2) | ppm | 3000 | 1000 | 3000 | 1000 | 3000 | 1000 | 3000 |
| UV Absorber (c1) | ppm | 2000 | 2000 | 1500 | 1500 | 2000 | 2000 | 3000 |
| UV Absorber (c2) | ppm | 1000 | 1000 | 1500 | 1500 | 1000 | 1000 | 3000 |
| Total (b)+(c) | wt.-% | 0.90 | 0.70 | 1.20 | 1.00 | 1.20 | 1.00 | 1.50 |
| Starting Haze | % | 1.0 | 1.0 | 1.1 | 1.2 | 1.1 | 1.0 | 1.0 |
| Initial b* | unitless | 0.98 | 0.98 | 1.20 | 1.24 | 1.21 | 1.11 | 1.72 |
| Final b* | unitless | 1.42 | 1.39 | 1.56 | 1.59 | 1.57 | 1.49 | 1.99 |
| Δ b* | unitless | 0.44 | 0.41 | 0.36 | 0.35 | 0.36 | 0.38 | 0.27 |
| Initial YI | unitless | 1.65 | 1.66 | 2.04 | 2.12 | 2.10 | 1.92 | 2.87 |
| Final YI | unitless | 2.49 | 2.44 | 2.74 | 2.78 | 2.78 | 2.65 | 3.40 |
| Δ YI | unitless | 0.84 | 0.78 | 0.70 | 0.66 | 0.68 | 0.73 | 0.53 |

From these Examples 1 to 15 it can be seen that all specimens had a haze of 1.5% or less before weathering, and at the same time experienced a change in Yellowness Index of less than 1.3. This shows that the compositions of the invention and the articles prepared therefrom have a good balance of optical properties and UV resistance. The compositions of the invention were further compared with compositions (comparative examples C1 to C6), wherein the UV absorber (c2) having a peak absorption at a wavelength of from 260 to less than 310 nm was not present, and optionally the HMw HALS (b2) was not present.

**Table 2: Comparison with non-inventive examples (similar additive loadings grouped)**

| | | Example # | | | | | | | |
|---|---|---|---|---|---|---|---|---|---|
| | Units | 2 | C1 | 1 | C2 | 5 | 8 | 10 | C3 |
| HMw HALS (b1) | ppm | 1500 | 0 | 1500 | 1500 | 3000 | 3000 | 3000 | 3000 |
| LMw HALS (b2) | ppm | 500 | 2000 | 2000 | 2000 | 2000 | 1000 | 1000 | 2000 |
| UV Absorber (c1) | ppm | 500 | 1000 | 500 | 1000 | 1500 | 1500 | 2000 | 2000 |
| UV Absorber (c2) | ppm | 500 | 0 | 500 | 0 | 500 | 1500 | 1000 | 0 |
| Total (b)+(c) | wt.-% | 0.30 | 0.30 | 0.45 | 0.45 | 0.70 | 0.70 | 0.70 | 0.70 |
| Δ b* | unitless | 0.68 | 1.10 | 0.64 | 0.79 | 0.48 | 0.36 | 0.41 | 0.64 |
| Δ YI | unitless | 1.25 | 2.00 | 1.15 | 1.34 | 0.89 | 0.68 | 0.78 | 1.18 |

**Table 2 continued**

| | | Example # | | | | | | |
|---|---|---|---|---|---|---|---|---|
| | Units | 7 | 9 | C4 | C5 | 11 | 13 | C6 |
| HMw HALS (b1) | ppm | 3000 | 3000 | 0 | 3000 | 6000 | 6000 | 6000 |
| LMw HALS (b2) | ppm | 3000 | 3000 | 6000 | 3000 | 3000 | 3000 | 3000 |
| UV Absorber (c1) | ppm | 1500 | 2000 | 3000 | 3000 | 1500 | 2000 | 3000 |
| UV Absorber (c2) | ppm | 1500 | 1000 | 0 | 0 | 1500 | 1000 | 0 |
| Total (b)+(c) | wt.-% | 0.90 | 0.90 | 0.90 | 0.90 | 1.20 | 1.20 | 1.20 |
| Δ b* | unitless | 0.39 | 0.44 | 0.89 | 0.50 | 0.36 | 0.36 | 0.47 |
| Δ YI | unitless | 0.80 | 0.84 | 1.67 | 0.93 | 0.70 | 0.68 | 0.89 |

From the direct comparison of compositions with the same UV additive loading (0.3 wt.-%, 0.45 wt.-%, 0.7 wt.-%, 0.9 wt.-% or 1.2 wt.-%), it can be seen that the compositions comprising each of (b1), (b2), (c1) and (c2) have significantly higher weathering stability than compositions lacking at least one of the UV additives, even if the missing additives are compensated with a larger amount of the additives present.

The compositions of the invention showed high utility for out-door equipment and articles used with exposure to e.g. sun-light, humidity and temperature changes.

Exemplary articles using the prepared compositions are: films, food packaging, bottles, boxes, window panes, signboards, screens, exterior lamp cases, optical fibers, sports equipment, medical and laboratory equipment, which have the above optical and weathering properties.

## Claims

1. A thermoplastic composition (P) comprising components (a), (b) (c) and optionally (d):
(a) 95 to 99.96 wt.-%, preferably 97 to 99.92 wt.-%, more preferably 98 to 99.9 wt.-%, more preferably 98.5 to 99.5 wt.-%, based on the total weight of the thermoplastic composition (P), of at least one copolymer (a) comprising (or consisting of) repeating units derived from a vinylaromatic monomer (a1), in particular styrene, and methyl methacrylate (a2);
(b) 0.02 to 1.5 wt.-%, preferably 0.04 to 1.3 wt.-%, more preferably 0.1 to 1.0 wt.-%, more preferably 0.2 to 0.6 wt.-%, based on the total weight of the thermoplastic composition (P), of at least two hindered amine light stabilizers (HALS) (b), wherein at least one HALS is a high molecular weight hindered amine light stabilizer (HMw HALS) (b1), having a number average molecular weight (Mn) ≥ (equal to or greater than) 1800 g/mol, preferably ≥ 1900 g/mol more preferably ≥ 2000 g/mol, and at least one HALS is a low molecular weight hindered amine light stabilizer (LMw HALS) (b2), having a number average molecular weight of ≤ (equal to or less than) 1000 g/mol, preferably ≤ 900 g/mol, more preferably ≤ 800 g/mol, wherein the number average molecular weight (Mn) is identical to the distinct molecular weight of the HALS, if the HALS has a distinct molecular weight rather than a distribution, or is determined by NMR;
(c) 0.02 to 1.5 wt.-%, preferably 0.04 to 1.0 wt.-%, more preferably 0.1 to 0.6 wt.-%, more preferably 0.2 to 0.4 wt.-%, based on the total weight of the thermoplastic composition (P), of at least two UV absorbers (c), which are not HALS, wherein at least one UV absorber (c1) has a peak absorption at a wavelength from 310 nm to 380 nm, and at least one UV absorber (c2) has a peak absorption at a wavelength from 260 nm to less than 310 nm, measured by UV/VIS spectroscopy;
(d) optionally up to 2.0 wt.-%, preferably up to 1.0 wt.-%, more preferably up to 0.5 wt.-%, more preferably up to 0.3 wt.-%, based on the total weight of the thermoplastic composition (P), of at least one further additive different from HALS and UV absorbers, preferably at least one antioxidant,
wherein the copolymer (a) comprises 30 to 60 wt.-%, preferably 31 to 50 wt.-%, more preferably 35 to 49 wt.-%, more preferably 40 to 48 wt.-% based on the copolymer (a), of repeating units derived from methyl methacrylate (a2).

2. The thermoplastic composition (P) according to claim 1, wherein copolymer (a) comprises 31 to 50 wt.-%, preferably 35 to 49 wt.-%, more preferably 40 to 48 wt.-% of repeating units derived from methyl methacrylate (a2), and 50 to 69 wt.-%, preferably 51 to 65 wt.-%, more preferably 52 to 60 wt.-% of repeating units derived from styrene.

3. The thermoplastic composition (P) according to claim 1 or 2, wherein component (d) is present in an amount of at least 0.01 wt.-%, preferably 0.02 wt.-%, more preferably 0.05 wt.-%, more preferably at least 0.1 wt.-%, based on the total weight of the thermoplastic composition (P).

4. The thermoplastic composition (P) according to any one of claims 1 to 3, wherein the weight ratio of components (b1):(b2) is from 12:1 to 1:2, preferably from 6:1 to 1.5:2, more preferably from 4:1 to 1:1, more preferably from 3:1 to 1:1.

5. The thermoplastic composition (P) according to any one of claims 1 to 4, wherein the weight ratio of components (c1):(c2) is from 8:1 to 1:4, preferably from 6:1 to 1:2, more preferably from 4:1 to 2:3, more preferably from 3:1 to 1.5:2, more preferably from 2:1 to 1:1.

6. The thermoplastic composition (P) according to any one of claims 1 to 5, wherein the weight ratio of components (b):(c) is from 5:1 to 1:5, preferably from 4:1 to 1:2, more preferably from 3:1 to 1:1, more preferably 3:1 to 4:3.

7. The thermoplastic composition (P) according to any one of claims 1 to 6, wherein the HMw HALS (b1) is based on 2,2,6,6-tetramethyl-piperidine derivatives, preferably derivatives of 2,2,6,6-tetramethyl-4-piperidyl substituted organic compounds, more preferably (b1) is selected from the group consisting of:
poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]); 1,5,8,12-tetrakis[4,6-bis(N-butyl-N-1,2,2,6,6-pentamethyl-4-piperidylamino)-1,3,5-triazin-2-yl]-1,5,8,12-tetraazadodecane; N,N'-Bis(2,2,6,6-tetramethyl-4-piperidinyl)-1,6-hexanediamine polymer with 2,4,6-trichloro-1,3,5-triazine reaction products with N-butyl-1-butanamine and N-butyl-2,2,6,6-tetramethyl-4-piperidinamine; 4-hydroxy-2,2,6,6-tetramethyl-1-piperidinethanol-dimethyl succinate copolymer; and 1,2,3,4-butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester, in particular poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]; and
wherein the LMw HALS (b2) is based on 2,2,6,6-tetramethyl-piperidine derivatives, preferably derivatives of 2,2,6,6-tetramethyl-4-piperidyl substituted organic compounds, more preferably (b2) is selected from the group consisting of:
bis(1-octyloxy-2,2,6,6-tetramethyl-4-piperidyl)sebacate; bis(1,2,2,6,6-pentamethyl-4-piperidyl) [[3,5-bis(1,1-dimethylethyl)-4 hydroxyphenyl]methyl]butylmalonate; bis(2,2,6,6,-tetramethyl-4-piperidyl)sebacate; Methyl 1,2,2,6,6-pentamethyl-4-piperidyl sebacate, Bis(1,2,2,6,6-pentamethyl-4-piperidinyl)-2-(4-methoxy- benzylidene)malonate; N,N'-bis-formyl-N,N'-bis-(2,2,6,6-tetramethyl-4-piperidinyl)- hexamethylendiamine; Bis(1,2,2,6,6-pentamethyl-4-piperidinyl)-2-(4-methoxy-benzylidene)malonate; Bis(1,2,2,6,6-pentamethyl-4-piperidyl)sebacate; 2,2,6,6-Tetramethyl-4-piperidinyl stearate; 4-Piperidinol-2,2,6, 6-tetramethyl-1-(undecyloxy)-4,4'-carbonate; 2,2,6,6-Tetramethyl-4-piperidinol; 2,2,6,6-Tetramethyl-4-piperidinyl hexadecanoate; 2,2,6,6-Tetramethyl-4-piperidinyl octadecanoate, and mixtures thereof.

8. The thermoplastic composition (P) according to any one of claims 1 to 7, wherein the LMw HALS (b2) is a derivative of a bis(2,2,6,6-tetramethyl-4-piperidyl)dicarboxylic acid diester, in particular bis(2,2,6,6,-tetramethyl-4-piperidyl)sebacate.

9. The thermoplastic composition (P) according to any one of claims 1 to 8 wherein the at least two UV absorbers (c) are at least two compounds selected from the group consisting of substituted benzotriazoles, substituted benzophenones, substituted triazines, oxalanilides, substituted resorcinols, salicylates and cyanoacrylates, preferably from the group consisting of 2-(2-hydroxyphenyl) benzotriazoles, 2-hydroxy-benzophenones, hydroxyphenyl-s-triazines and oxalanilides.

10. The thermoplastic composition (P) according to any one of claims 1 to 9, wherein the at least one UV absorber (c1) with a peak absorption at a wavelength from 310 nm to 380 nm is a 2-(2-hydroxyphenyl) benzotriazole, preferably 2-(2H-benzotriazol-2-yl)-4-(1,1,3,3-tetramethylbutyl)phenol, and wherein the at least one UV absorber (c2) with a peak absorption at a wavelength from 260 nm to less than 310 nm is a hydroxyphenyl triazine, preferably 2-(4,6-diphenyl-1,3,5-triazin-2-yl)-5-hexyloxy phenol.

11. The thermoplastic composition (P) according to any one of claims 1 to 10, comprising:
(a) 95 to 99.96 wt.-%, preferably 97 to 99.92 wt.-%, more preferably 98 to 99.9 wt.-%, more preferably 99 to 99.8 wt.-% based on the total weight of the thermoplastic composition (P), of the at least one copolymer (a);
(b1) 0.01 to 0.8 wt.-%, preferably 0.02 to 0.7 wt.-%, more preferably 0.05 to 0.6 wt.-%, more preferably 0.1 to 0.3 wt.-% based on the total weight of the thermoplastic composition (P), of the at least one HMw HALS (b1);
(b2) 0.01 to 0.7wt.-%, preferably 0.02 to 0.6 wt.-%, more preferably 0.05 to 0.4 wt.-%, more preferably 0.1 to 0.3 wt.-%, based on the total weight of the thermoplastic composition (P), of the at least one LMw HALS (b2);
(c1) 0.01 to 0.8 wt.-%, preferably 0.02 to 0.5 wt.-%, more preferably 0.05 to 0.3 wt.-%, more preferably 0.1 to 0.2 wt.-%, based on the total weight of the thermoplastic composition (P), of the at least one UV absorber (c1) having a peak absorption at a wavelength from 310 nm to 380 nm;
(c2) 0.01 to 0.7 wt.-%, preferably 0.02 to 0.5 wt.-%, more preferably 0.05 to 0.3 wt.-%, more preferably 0.1 to 0.2 wt.-%, based on the total weight of the thermoplastic composition (P), of the at least one UV absorber (c2) having a peak absorption at a wavelength from 260 nm to less than 310 nm;
(d) optionally up to 2.0 wt.-%, preferably up to 1.0 wt.-%, more preferably up to 0.5 wt.-%, more preferably up to 0.3 wt.-% of at least one further additive (d) different from HALS and UV absorbers.

12. A process for the preparation of a thermoplastic composition (P) according to any of claims 1 to 11 by mixing copolymer (a) with HMw-HALS (b1), LMw-HALS (b2), UV absorber (c1) having a peak absorption at a wavelength from 310 nm to 380 nm, UV absorber (c2) having a peak absorption at a wavelength from 260 nm to less than 310 nm, and, if present, at least one further additive (d), wherein components (a), (b1), (b2), (c1), (c2) and (d) are as defined in any one of claims 1 to 11.

13. A process for the preparation of a shaped article comprising the thermoplastic composition (P) according to any one of claims 1 to 11, wherein the shaped article is formed by extrusion, injection molding, casting, blow molding, spraying, spinning, rolling or weaving, in particular by extrusion or injection molding.

14. A shaped article comprising (or consisting of) a thermoplastic composition (P) according to claims 1 to 11.

15. The use of the thermoplastic composition according to any one of claims 1 to 11 or the shaped article according to claim 14 for outdoor applications, preferably in the construction and automotive sector, more preferably for exterior automotive parts, in particular as exterior rear combination lamps.

16. The use of components (a), (b), (c) and optionally (d), as defined in any one of claims 1 to 11 in the amounts as defined in any one of claims 1 to 11, for the preparation of a thermoplastic composition (P) or a shaped article with following properties:
(i) haze of less than 1.5%, measured according to ASTM D 1003 for a specimen having a thickness of 3,175 mm (1/8 inch);
(ii) a weathering resistance, which is **characterized in that**:
after outdoor stability testing according to SAE J2527 (issued 2004-02) through SAE J1960 at a radiant exposure of 5000 kJ/m² (Xenon irradiance (340 nm) of 0.55 W/m²), the yellowness index according to ASTM method E313 (test specimens of 3.125 mm (1/8) inch thickness) increases by less than 1.3, preferably less than 1.0, more preferably less than 0.89 (measured from the CIE color space values using a D65 light source (observation angle 10°) according to ASTM E1348:2015).

## Patentansprüche

1. Thermoplastische Zusammensetzung (P), umfassend Komponenten (a), (b), (c) und optional (d):
(a) 95 bis 99,96 Gew.-%, bevorzugt 97 bis 99,92 Gew.-%, mehr bevorzugt 98 bis 99,9 Gew.-%, mehr bevorzugt 98,5 bis 99,5 Gew.-%, bezogen auf das Gesamtgewicht der thermoplastischen Zusammensetzung (P), mindestens eines Copolymers (a), umfassend (oder bestehend aus) Wiederholungseinheiten, die von einem vinylaromatischen Monomer (a1), insbesondere Styrol, und Methylmethacrylat (a2) abgeleitet sind;
(b) 0,02 bis 1,5 Gew.-%, bevorzugt 0,04 bis 1,3 Gew.-%, mehr bevorzugt 0,1 bis 1,0 Gew.-%, mehr bevorzugt 0,2 bis 0,6 Gew.-%, bezogen auf das Gesamtgewicht der thermoplastischen Zusammensetzung (P), an mindestens zwei gehinderten Amin-Lichtstabilisatoren (HALS) (b), wobei mindestens ein HALS ein hochmolekularer gehinderter Amin-Lichtstabilisator (HMw-HALS) (b1) mit einem zahlenmittleren Molekulargewicht (Mn) von ≥ (gleich oder größer als) 1800 g/mol, bevorzugt ≥ 1900 g/mol, mehr bevorzugt ≥ 2000 g/mol ist, und mindestens ein HALS ein niedermolekularer gehinderter Amin-Lichtstabilisator (LMw-HALS) (b2) mit einem zahlenmittleren Molekulargewicht von ≤ (gleich oder kleiner als) 1000 g/mol, bevorzugt ≤ 900 g/mol, mehr bevorzugt ≤ 800 g/mol ist, wobei das zahlenmittlere Molekulargewicht (Mn) mit dem spezifischen Molekulargewicht des HALS identisch ist, falls das HALS ein spezifisches Molekulargewicht anstelle einer Verteilung aufweist, oder mittels NMR bestimmt wird;
(c) 0,02 bis 1,5 Gew.-%, bevorzugt 0,04 bis 1,0 Gew.-%, mehr bevorzugt 0,1 bis 0,6 Gew.-%, mehr bevorzugt 0,2 bis 0,4 Gew.-%, bezogen auf das Gesamtgewicht der thermoplastischen Zusammensetzung (P), von mindestens zwei UV-Absorbern (c), die keine HALS sind, wobei mindestens ein UV-Absorber (c1) einen Absorptionspeak bei einer Wellenlänge von 310 nm bis 380 nm aufweist und mindestens ein UV-Absorber (c2) einen Absorptionspeak bei einer Wellenlänge von 260 nm bis weniger als 310 nm aufweist, gemessen mittels UV/VIS-Spektroskopie;
(d) optional bis zu 2,0 Gew.-%, bevorzugt bis zu 1,0 Gew.-%, mehr bevorzugt bis zu 0,5 Gew.-%, mehr bevorzugt bis zu 0,3 Gew.-%, bezogen auf das Gesamtgewicht der thermoplastischen Zusammensetzung (P), mindestens eines weiteren Additivs, das sich von HALS und UV-Absorbern unterscheidet, bevorzugt mindestens eines Antioxidans,
wobei das Copolymer (a) 30 bis 60 Gew.-%, bevorzugt 31 bis 50 Gew.-%, mehr bevorzugt 35 bis 49 Gew.-%, mehr bevorzugt 40 bis 48 Gew.-%, bezogen auf das Copolymer (a), an Wiederholungseinheiten umfasst, die von Methylmethacrylat (a2) abgeleitet sind.

2. Thermoplastische Zusammensetzung (P) nach Anspruch 1, wobei das Copolymer (a) 31 bis 50 Gew.-%, bevorzugt 35 bis 49 Gew.-%, mehr bevorzugt 40 bis 48 Gew.-%, an Wiederholungseinheiten, die von Methylmethacrylat (a2) abgeleitet sind, und 50 bis 69 Gew.-%, bevorzugt 51 bis 65 Gew.-%, mehr bevorzugt 52 bis 60 Gew.-% an Wiederholungseinheiten, die von Styrol abgeleitet sind, umfasst.

3. Thermoplastische Zusammensetzung (P) nach Anspruch 1 oder 2, wobei die Komponente (d) in einer Menge von mindestens 0,01 Gew.-%, bevorzugt 0,02 Gew.-%, mehr bevorzugt 0,05 Gew.-%, mehr bevorzugt mindestens 0,1 Gew.-%, bezogen auf das Gesamtgewicht der thermoplastischen Zusammensetzung (P), vorliegt.

4. Thermoplastische Zusammensetzung (P) nach einem beliebigen der Ansprüche 1 bis 3, wobei das Gewichtsverhältnis der Komponenten (b1):(b2) von 12:1 bis 1:2, bevorzugt von 6:1 bis 1,5:2, mehr bevorzugt von 4:1 bis 1:1, mehr bevorzugt von 3:1 bis 1:1 beträgt.

5. Thermoplastische Zusammensetzung (P) nach einem beliebigen der Ansprüche 1 bis 4, wobei das Gewichtsverhältnis der Komponenten (c1):(c2) von 8:1 bis 1:4, bevorzugt von 6:1 bis 1:2, mehr bevorzugt von 4:1 bis 2:3, mehr bevorzugt von 3:1 bis 1,5:2, mehr bevorzugt von 2:1 bis 1:1 beträgt.

6. Thermoplastische Zusammensetzung (P) nach einem beliebigen der Ansprüche 1 bis 5, wobei das Gewichtsverhältnis der Komponenten (b):(c) von 5:1 bis 1:5, bevorzugt von 4:1 bis 1:2, mehr bevorzugt von 3:1 bis 1:1, mehr bevorzugt von 3:1 bis 4:3 beträgt.

7. Thermoplastische Zusammensetzung (P) nach einem beliebigen der Ansprüche 1 bis 6, wobei das HMw-HALS (b1) auf 2,2,6,6-Tetramethylpiperidin-Derivaten basiert, bevorzugt auf Derivaten von 2,2,6,6-Tetramethyl-4-piperidyl-substituierten organischen Verbindungen, mehr bevorzugt (b1) aus der Gruppe ausgewählt ist, bestehend aus:
Poly[[6-[(1,1,3,3-tetramethylbutyl)amino]-1,3,5-triazin-2,4-diyl][(2,2,6,6-Tetramethyl-4-piperidinyl)imino]-1,6-hexandiyl[(2,2,6,6-tetramethyl-4-piperidinyl)imino]]); 1,5,8,12-Tetrakis[4,6-bis(N-butyl-N-1,2,2,6,6-pentamethyl-4-piperidylamino)-1,3,5-triazin-2-yl]-1,5,8,12-tetraazadodecan; N,N'-Bis(2,2,6,6-tetramethyl-4-piperidinyl)-1,6-hexandiamin-Polymer mit 2,4,6-Trichlor-1,3,5-triazin-Reaktionsprodukten mit N-Butyl-1-butanamin und N-Butyl-2,2,6,6-tetramethyl-4-piperidinamin; 4-Hydroxy-2,2,6,6-tetramethyl-1-piperidinethanol-dimethylsuccinat-Copolymer; und 1,2,3,4-Butantetracarbonsäure, Polymer mit 2,2-Bis(hydroxymethyl)-1,3-propandiol und 3-Hydroxy-2,2-dimethylpropanal, 1,2,2,6,6-Pentamethyl-4-piperidinylester, insbesondere Poly[[6-[(1,1,3,3-tetramethylbutyl)amino]-1,3,5-triazin-2,4-diyl][(2,2,6,6-Tetramethyl-4-piperidinyl)imino]-1,6-hexand-iyl[(2,2,6,6-Tetramethyl-4-piperidinyl)imino]]; und
wobei das LMw-HALS (b2) auf 2,2,6,6-Tetramethylpiperidin-Derivaten basiert, bevorzugt auf Derivaten von 2,2,6,6-Tetramethyl-4-piperidyl-substituierten organischen Verbindungen, mehr bevorzugt (b2) aus der Gruppe ausgewählt ist, bestehend aus:
Bis(1-octyloxy-2,2,6,6-tetramethyl-4-piperidyl)sebacat; Bis(1,2,2,6,6-pentamethyl-4-piperidyl)[[3,5-bis(1,1-dimethylethyl)-4-hydroxyphenyl]methyl]butylmalonat; Bis(2,2,6,6-tetramethyl-4-piperidyl)sebacat; Methyl-1,2,2,6,6-pentamethyl-4-piperidylsebacat, Bis(1,2,2,6,6-pentamethyl-4-piperidinyl)-2-(4-methoxybenzyliden)malonat; N,N'-Bis-formyl-N,N'-bis-(2,2,6,6-tetramethyl-4-piperidinyl)-hexamethylendiamin; Bis(1,2,2,6,6-pentamethyl-4-piperidinyl)-2-(4-methoxy-benzyliden)malonat; Bis(1,2,2,6,6-pentamethyl-4-piperidyl)sebacat; 2,2,6,6-Tetramethyl-4-piperidinylstearat; 4-Piperidinol-2,2,6,6-tetramethyl-1-(undecyloxy)-4,4'-carbonat; 2,2,6,6-Tetramethyl-4-piperidinol; 2,2,6,6-Tetramethyl-4-piperidinylhexadecanoat; 2,2,6,6-Tetramethyl-4-piperidinyloctadecanoat und Mischungen davon.

8. Thermoplastische Zusammensetzung (P) nach einem beliebigen der Ansprüche 1 bis 7, wobei das LMw-HALS (b2) ein Derivat eines Bis(2,2,6,6-tetramethyl-4-piperidyl)di-carbonsäurediesters ist, insbesondere Bis(2,2,6,6-tetramethyl-4-piperidyl)sebacat.

9. Thermoplastische Zusammensetzung (P) nach einem beliebigen der Ansprüche 1 bis 8, wobei die mindestens zwei UV-Absorber (c) mindestens zwei Verbindungen sind, ausgewählt aus der Gruppe bestehend aus substituierten Benzotriazolen, substituierten Benzophenonen, substituierten Triazinen, Oxalaniliden, substituierten Resorcinolen, Salicylaten und Cyanacrylaten, bevorzugt aus der Gruppe bestehend aus 2-(2-Hydroxyphenyl)benzotriazolen, 2-Hydroxybenzophenonen, Hydroxyphenyl-s-triazinen und Oxalaniliden.

10. Thermoplastische Zusammensetzung (P) nach einem beliebigen der Ansprüche 1 bis 9, wobei der mindestens eine UV-Absorber (c1) mit einem Absorptionspeak bei einer Wellenlänge von 310 nm bis 380 nm ein 2-(2-Hydroxyphenyl)benzotriazol, bevorzugt 2-(2H-Benzotriazol-2-yl)-4-(1,1,3,3-tetramethylbutyl)phenol, ist, und wobei der mindestens eine UV-Absorber (c2) mit einem Absorptionspeak bei einer Wellenlänge von 260 nm bis weniger als 310 nm ein Hydroxyphenyltriazin, bevorzugt 2-(4,6-Diphenyl-1,3,5-triazin-2-yl)-5-hexyloxy-phenol, ist.

11. Thermoplastische Zusammensetzung (P) nach einem beliebigen der Ansprüche 1 bis 10, umfassend:
(a) 95 bis 99,96 Gew.-%, bevorzugt 97 bis 99,92 Gew.-%, mehr bevorzugt 98 bis 99,9 Gew.-%, mehr bevorzugt 99 bis 99,8 Gew.-%, bezogen auf das Gesamtgewicht der thermoplastischen Zusammensetzung (P), des mindestens einen Copolymers (a);
(b1) 0,01 bis 0,8 Gew.-%, bevorzugt 0,02 bis 0,7 Gew.-%, mehr bevorzugt 0,05 bis 0,6 Gew.-%, mehr bevorzugt 0,1 bis 0,3 Gew.-%, bezogen auf das Gesamtgewicht der thermoplastischen Zusammensetzung (P), des mindestens einen HMw-HALS (b1);
(b2) 0,01 bis 0,7 Gew.-%, bevorzugt 0,02 bis 0,6 Gew.-%, mehr bevorzugt 0,05 bis 0,4 Gew.-%, mehr bevorzugt 0,1 bis 0,3 Gew.-%, bezogen auf das Gesamtgewicht der thermoplastischen Zusammensetzung (P), des mindestens einen LMw-HALS (b2);
(c1) 0,01 bis 0,8 Gew.-%, bevorzugt 0,02 bis 0,5 Gew.-%, mehr bevorzugt 0,05 bis 0,3 Gew.-%, mehr bevorzugt 0,1 bis 0,2 Gew.-%, bezogen auf das Gesamtgewicht der thermoplastischen Zusammensetzung (P), des mindestens einen UV-Absorbers (c1) mit einem Absorptionspeak bei einer Wellenlänge von 310 nm bis 380 nm;
(c2) 0,01 bis 0,7 Gew.-%, bevorzugt 0,02 bis 0,5 Gew.-%, mehr bevorzugt 0,05 bis 0,3 Gew.-%, mehr bevorzugt 0,1 bis 0,2 Gew.-%, bezogen auf das Gesamtgewicht der thermoplastischen Zusammensetzung (P), des mindestens einen UV-Absorbers (c2) mit einem Absorptionspeak bei einer Wellenlänge von 260 nm bis weniger als 310 nm;
(d) optional bis zu 2,0 Gew.-%, bevorzugt bis zu 1,0 Gew.-%, mehr bevorzugt bis zu 0,5 Gew.-%, mehr bevorzugt bis zu 0,3 Gew.-% mindestens eines weiteren Additivs (d), das sich von HALS und UV-Absorbern unterscheidet.

12. Verfahren zur Herstellung einer thermoplastischen Zusammensetzung (P) nach einem beliebigen der Ansprüche 1 bis 11 durch Mischen von Copolymer (a) mit HMw-HALS (b1), LMw-HALS (b2), einem UV-Absorber (c1) mit einem Absorptionspeak bei einer Wellenlänge von 310 nm bis 380 nm, einem UV-Absorber (c2) mit einem Absorptionspeak bei einer Wellenlänge von 260 nm bis weniger als 310 nm und, falls vorhanden, mindestens einem weiteren Additiv (d), wobei die Komponenten (a), (b1), (b2), (c1), (c2) und (d) wie in einem der Ansprüche 1 bis 11 definiert sind.

13. Verfahren zur Herstellung eines Formkörpers, umfassend die thermoplastische Zusammensetzung (P) nach einem beliebigen der Ansprüche 1 bis 11, wobei der Formkörper durch Extrusion, Spritzgießen, Gießen, Blasformen, Sprühen, Spinnen, Walzen oder Weben, insbesondere durch Extrusion oder Spritzgießen, geformt wird.

14. Formkörper, umfassend (oder bestehend aus) eine thermoplastische Zusammensetzung (P) nach einem beliebigen der Ansprüche 1 bis 11.

15. Verwendung der thermoplastischen Zusammensetzung nach einem beliebigen der Ansprüche 1 bis 11 oder des Formkörpers nach Anspruch 14 für Außenanwendungen, bevorzugt im Bau- und Automobilsektor, mehr bevorzugt für Automobilaußenteile, insbesondere als hintere Kombinationsleuchten.

16. Verwendung der in einem beliebigen der Ansprüche 1 bis 11 definierten Komponenten (a), (b), (c) und optional (d) in den in einem beliebigen der Ansprüche 1 bis 11 definierten Mengen zur Herstellung einer thermoplastischen Zusammensetzung (P) oder eines Formkörpers mit folgenden Eigenschaften:
(i) Trübung von weniger als 1,5 %, gemessen nach ASTM D 1003 für eine Probe mit einer Dicke von 3,175 mm (1/8 Zoll);
(ii) eine Witterungsbeständigkeit, die **dadurch gekennzeichnet ist, dass**:
nach einer Freilandstabilitätsprüfung nach SAE J2527 (ausgegeben 2004-02) bis SAE J1960 bei einer Strahlungsbelastung von 5000 kJ/m² (Xenon-Bestrahlungsstärke (340 nm) von 0,55 W/m²), der Yellowness Index nach ASTM-Methode E313 (Prüfkörper mit einer Dicke von 3,125 mm (1/8 Zoll)) um weniger als 1,3, bevorzugt weniger als 1,0, mehr bevorzugt weniger als 0,89 ansteigt (gemessen anhand der CIE-Farbraumwerte unter Verwendung einer D65-Lichtquelle (Beobachtungswinkel 10°) nach ASTM E1348:2015).

## Revendications

1. Composition thermoplastique (P) comprenant des composants (a), (b) (c) et éventuellement (d) :
(a) 95 à 99,96 % en poids, de préférence 97 à 99,92 % en poids, plus préférablement 98 à 99,9 % en poids, plus préférablement 98,5 à 99,5 % en poids, sur la base du poids total de la composition thermoplastique (P), d'au moins un copolymère (a) comprenant des (ou constitué de) motifs répétitifs dérivés d'un monomère vinylaromatique (a1), en particulier le styrène et le méthacrylate de méthyle (a2) ;
(b) 0,02 à 1,5 % en poids, de préférence 0,04 à 1,3 % en poids, plus préférablement 0,1 à 1,0 % en poids, plus préférablement 0,2 à 0,6 % en poids, sur la base du poids total de la composition thermoplastique (P), d'au moins deux photostabilisants de type amine encombrée (HALS) (b), au moins un HALS étant un photostabilisant de type amine encombrée de poids moléculaire élevé (HMw HALS) (b1), possédant un poids moléculaire moyen en nombre (Mn) ≥ (égal ou supérieur à) 1 800 g/mole, préférablement ≥ 1 900 g/mole, plus préférablement ≥ 2 000 g/mole, et au moins un HALS est un photostabilisant type amine encombrée de bas poids moléculaire (LMw HALS) (b2), possédant un poids moléculaire moyen en nombre de ≤ (égal ou inférieur à) 1 000 g/mole, préférablement ≤ 900 g/mole, plus préférablement ≤ 800 g/mole, dans laquelle le poids moléculaire moyen en nombre (Mn) est identique au poids moléculaire distinct du HALS, si le HALS a un poids moléculaire distinct plutôt qu'une distribution, ou est déterminé par RMN ;
(c) 0,02 à 1,5 % en poids, de préférence 0,04 à 1,0 % en poids, plus préférablement 0,1 à 0,6 % en poids, plus préférablement 0,2 à 0,4 % en poids, sur la base du poids total de la composition thermoplastique (P), d'au moins deux absorbeurs UV (c), qui ne sont pas HALS, au moins un absorbeur UV (c1) possédant un pic d'absorption à une longueur d'onde de 310 nm à 380 nm, et au moins un absorbeur UV (c2) possédant un pic d'absorption à une longueur d'onde allant de 260 nm à moins de 310 nm, mesurée par spectroscopie UV/VIS ;
(d) éventuellement jusqu'à 2,0 % en poids, de préférence jusqu'à 1,0 % en poids, plus préférablement jusqu'à 0,5 % en poids, plus préférablement jusqu'à 0,3 % en poids, sur la base du poids total de la composition thermoplastique (P), d'au moins un autre additif différent de HALS et des absorbeurs UV, de préférence au moins un antioxydant,
le copolymère (a) comprenant 30 à 60 % en poids, de préférence 31 à 50 % en poids, plus préférablement 35 à 49 % en poids, plus préférablement 40 à 48 % en poids, sur la base du copolymère (a), de motifs répétitifs dérivés de méthacrylate de méthyle (a2).

2. Composition thermoplastique (P) selon la revendication 1, dans laquelle le copolymère (a) comprend 31 à 50 % en poids, de préférence 35 à 49 % en poids, plus préférablement 40 à 48 % en poids de motifs répétitifs dérivés du méthacrylate de méthyle (a2), et 50 à 69 % en poids, de préférence 51 à 65 % en poids, plus préférablement 52 à 60 % en poids de motifs répétitifs dérivés du styrène.

3. Composition thermoplastique (P) selon la revendication 1 ou 2, le composant (d) étant présent en une quantité d'au moins 0,01 % en poids, de préférence 0,02 % en poids, plus préférablement de 0,05 % en poids, plus préférablement d'au moins 0,1 % en poids, sur la base du poids total de la composition thermoplastique (P).

4. Composition thermoplastique (P) selon l'une quelconque des revendications 1 à 3, dans laquelle le rapport en poids des composants (b1):(b2) est de 12:1 à 1:2, préférablement de 6:1 à 1,5:2, plus préférablement de 4:1 à 1:1, plus préférablement de 3:1 à 1:1.

5. Composition thermoplastique (P) selon l'une quelconque des revendications 1 à 4, dans laquelle le rapport en poids des composants (c1):(c2) est de 8:1 à 1:4, préférablement de 6:1 à 1:2, plus préférablement de 4:1 à 2:3, plus préférablement de 3:1 à 1,5:2, plus préférablement de 2:1 à 1:1.

6. Composition thermoplastique (P) selon l'une quelconque des revendications 1 à 5, dans laquelle le rapport en poids des composants (b):(c) est de 5:1 à 1:5, préférablement de 4:1 à 1:2, plus préférablement de 3:1 à 1:1, plus préférablement 3:1 à 4:3.

7. Composition thermoplastique (P) selon l'une quelconque des revendications 1 à 6, dans laquelle le HMw HALS (b1) est à base de dérivés de 2,2,6,6-tétraméthylpipéridine, de préférence des dérivés de composés organiques substitués par 2,2,6,6-tétraméthyl-4-pipéridinyle, plus préférablement (b1) est choisi dans le groupe constitué par :
poly[[6-[(1,1,3,3-tétraméthylbutyl)amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)iminoll) ; 1,5,8,12-tétrakis[4,6-bis(N-butyl-N-1,2,2,6,6-pentaméthyl-4-pipéridinylamino)-1,3,5-triazin-2-yl]-1,5,8,12-tétraazadodécane ;
polymère de N,N'-bis(2,2,6,6-tétraméthyl-4-pipéridinyl)-1,6-hexanediamine avec des produits de réaction de 2,4,6-trichloro-1,3,5-triazine avec la N-butyl-1-butanamine et la N-butyl-2,2,6,6-tétraméthyl-4-pipéridinamine ; copolymère de 4-hydroxy-2,2,6,6-tétraméthyl-1-pipéridinéthanol-diméthyl succinate ; et acide 1,2,3,4-butanététracarboxylique, polymère avec le 2,2-bis(hydroxyméthyl)-1,3-propanediol et le 3-hydroxy-2,2-diméthylpropanal, ester de 1,2,2,6,6-pentaméthyl-4-pipéridinyle, en particulier poly[[6-[(1,1,3,3-tétraméthylbutyl)amino]-1,3,5-triazine-2,4-diyl][(2,2,6,6-tétraméthyl-4-pipéridinyl)imino]-1,6-hexanediyl[(2,2,6,6-tétraméthyl-4-pipéridinyl)imino]] ; et
dans laquelle le LMw HALS (b2) est à base de dérivés de 2,2,6,6-tétraméthylpipéridine, de préférence des dérivés de composés organiques substitués par 2,2,6,6-tétraméthyl-4-pipéridinyle, plus préférablement (b2) est choisi dans le groupe constitué par :
bis(1-octyloxy-2,2,6,6-tétraméthyl-4-pipéridinyle)sébacate ; [[3,5-bis(1,1-diméthyléthyl)-4-hydroxyphényl]méthyl]butylmalonate de bis(1,2,2,6,6-pentaméthyl-4-pipéridinyle) ; bis(2,2,6,6-tétraméthyl-4-pipéridinyl)sébacate ; 1,2,2,6,6-pentaméthyl-4-pipéridinylsébacate de méthyle, bis(1,2,2,6,6-pentaméthyl-4-pipéridinyl)-2-(4-méthoxybenzylidène)malonate ; N,N'-bis-formyl-N,N'-bis-(2,2,6,6-tétraméthyl-4-pipéridinyl)-hexaméthylènediamine ; bis(1,2,2,6,6-pentaméthyl-4-pipéridinyl)-2-(4-méthoxy-benzylidène)malonate ;
bis(1,2,2,6,6-pentaméthyl-4-pipéridinyl)sébacate ; stéarate de 2,2,6,6-tétraméthyl-4-pipéridinyle ; 4-pipéridinol-2,2,6,6-tétraméthyl-1-(undécyloxy)-4,4'-carbonate ; 2,2,6,6-tétraméthyl-4-pipéridinol ; hexadécanoate de 2,2,6,6-tétraméthyl-4-pipéridinyle ; octadécanoate de 2,2,6,6-tétraméthyl-4-pipéridinyle, et des mélanges correspondants.

8. Composition thermoplastique (P) selon l'une quelconque des revendications 1 à 7, dans laquelle le LMw HALS (b2) est un dérivé d'un diester d'acide (2,2,6,6-tétraméthyl-4-pipéridinyl)dicarboxylique, en particulier le bis(2,2,6,6,-tétraméthyl-4-pipéridinyl)sébacate.

9. Composition thermoplastique (P) selon l'une quelconque des revendications 1 à 8, les au moins deux absorbeurs UV (c) étant au moins deux composés choisis dans le groupe constitué par des benzotriazoles substitués, des benzophénones substituées, des triazines substituées, des oxalanilides, des résorcinols substitués, des salicylates et des cyanoacrylates, préférablement dans le groupe constitué par les 2-(2-hydroxyphényl)benzotriazoles, les 2-hydroxy-benzophénones, les hydroxyphényl-s-triazines et les oxalanilides.

10. Composition thermoplastique (P) selon l'une quelconque des revendications 1 à 9, dans laquelle l'au moins un absorbeur UV (c1) ayant un pic d'absorption à une longueur d'onde de 310 nm à 380 nm est un 2-(2-hydroxyphényl)benzotriazole, de préférence le 2-(2H-benzotriazol-2-yl)-4-(1,1,3,3-tétraméthylbutyl)phénol, et dans laquelle l'au moins un absorbeur UV (c2) ayant un pic d'absorption à une longueur d'onde de 260 nm à moins de 310 nm est une hydroxyphényltriazine, de préférence 2-(4,6-diphényl-1,3,5-triazin-2-yl)-5-hexyloxyphénol.

11. Composition thermoplastique (P) selon l'une quelconque des revendications 1 à 10, comprenant :
(a) 95 à 99,96 % en poids, préférablement 97 à 99,92 % en poids, plus préférablement 98 à 99,9 % en poids, plus préférablement 99 à 99,8 % en poids, sur la base du poids total de la composition thermoplastique (P), de l'au moins un copolymère (a) ;
(b1) 0,01 à 0,8 % en poids, de préférence 0,02 à 0,7 % en poids, plus préférablement 0,05 à 0,6 % en poids, plus préférablement 0,1 à 0,3 % en poids sur la base du poids total de la composition thermoplastique (P), de l'au moins un HMw HALS (b1) ;
(b2) 0,01 à 0,7 % en poids, préférablement 0,02 à 0,6 % en poids, plus préférablement 0,05 à 0,4 % en poids, plus préférablement 0,1 à 0,3 % en poids, sur la base du poids total de la composition thermoplastique (P), de l'au moins un LMw HALS (b2) ;
(c1) 0,01 à 0,8 % en poids, préférablement 0,02 à 0,5 % en poids, plus préférablement 0,05 à 0,3 % en poids, plus préférablement 0,1 à 0,2 % en poids, sur la base du poids total de la composition thermoplastique (P), de l'au moins un absorbeur UV (c1) possédant un pic d'absorption à une longueur d'onde de 310 nm à 380 nm ;
(c2) 0,01 à 0,7 % en poids, préférablement 0,02 à 0,5 % en poids, plus préférablement 0,05 à 0,3 % en poids, plus préférablement 0,1 à 0,2 % en poids, sur la base du poids total de la composition thermoplastique (P), de l'au moins un absorbeur UV (c2) possédant un pic d'absorption à une longueur d'onde comprise entre 260 nm et moins de 310 nm ;
(d) facultativement jusqu'à 2,0 % en poids, de préférence jusqu'à 1,0 % en poids, plus préférablement jusqu'à 0,5 % en poids, plus préférablement jusqu'à 0,3 % en poids, d'au moins un autre additif (d) différent de HALS et des absorbeurs UV.

12. Procédé de préparation d'une composition thermoplastique (P) selon l'une quelconque des revendications 1 à 11, par mélange du copolymère (a) avec HMw-HALS (b1), LMw-HALS (b2), absorbeur UV (c1) ayant un pic d'absorption à une longueur d'onde de 310 nm à 380 nm, absorbeur UV (c2) ayant un pic d'absorption à une longueur d'onde de 260 nm à moins de 310 nm, et, s'il est présent, au moins un additif supplémentaire (d), dans lequel les composants (a), (b1), (b2), (c1), (c2) et (d) sont tels que définis dans l'une quelconque des revendications 1 à 11.

13. Procédé de préparation d'un article façonné comprenant la composition thermoplastique (P) selon l'une quelconque des revendications 1 à 11, dans lequel l'article façonné est formé par extrusion, moulage par injection, coulée, moulage par soufflage, pulvérisation, filage, laminage ou tissage, notamment par extrusion ou moulage par injection.

14. Article façonné comprenant (ou constitué de) une composition thermoplastique (P) selon les revendications 1 à 11.

15. Utilisation de la composition thermoplastique selon l'une quelconque des revendications 1 à 11 ou de l'article façonné selon la revendication 14 pour des applications extérieures, de préférence dans le secteur de la construction et de l'automobile, plus préférablement pour des pièces automobiles extérieures, en particulier en tant que feux arrière combinés extérieurs.

16. Utilisation des composants (a), (b), (c) et éventuellement (d), tels que définis selon l'une quelconque des revendications 1 à 11, dans les quantités telles que définies selon l'une quelconque des revendications 1 à 11, pour la préparation d'une composition thermoplastique (P) ou d'un article façonné ayant des propriétés suivantes :
(i) trouble inférieur à 1,5 %, mesuré selon la norme ASTM D 1003 pour un échantillon ayant une épaisseur de 3,175 mm (1/8 pouce) ;
(ii) une résistance aux intempéries, qui est **caractérisée en ce que** :
après des essais de stabilité à l'extérieur selon la norme SAE J2527 (2004-02) par la norme SAE J1960 à une exposition radiante de 5 000 kJ/m² (irradiance au xénon (340 nm) de 0,55 W/m²), l'indice de jaunissement selon le procédé de la norme ASTM E313 (éprouvettes de 3,125 mm (1/8) pouce d'épaisseur) augmente de moins de 1,3, de préférence de moins de 1,0, plus préférablement de moins de 0,89 (mesuré à partir des valeurs de l'espace colorimétrique CIE en utilisant une source de lumière D65 (angle d'observation 10°) selon la norme ASTM E1348:2015).
